Europäisches Patentamt

European Patent Office

Office européen des brevets

(11) Veröffentlichungsnummer: **0 367 020 B1**

# EUROPÄISCHE PATENTSCHRIFT

(12)

(45) Veröffentlichungstag der Patentschrift: **23.12.92**

(21) Anmeldenummer: **89119312.0**

(22) Anmeldetag: **18.10.89**

(51) Int. Cl.⁵: **F16H 3/08**, F16H 3/12

---

(54) **Verfahren zum Schalten eines Stufenwechselgetriebes.**

---

(30) Priorität: **31.10.88 DE 3836985**

(43) Veröffentlichungstag der Anmeldung:
**09.05.90 Patentblatt 90/19**

(45) Bekanntmachung des Hinweises auf die
Patenterteilung:
**23.12.92 Patentblatt 92/52**

(84) Benannte Vertragsstaaten:
**DE ES FR GB IT**

(56) Entgegenhaltungen:
**EP-A- 0 088 486        EP-A- 0 149 302**
**EP-A- 0 173 117        EP-A- 0 212 182**
**EP-A- 0 300 792        CH-A- 207 438**
**FR-A- 2 154 235        FR-A- 2 521 078**

**THE AUTOCAR, 16 April 1954, Seiten 535-537;**
**"Transmission by Magentism"**

**PATENT ABSTRACTS OF JAPAN vol. 12, no.**
**212 (M-710)(3059) 17 Juni 1988, & JP-A-63**
**13823 (TOYOTA MOTOR CORP) 21 Januar**
**1988,**

(73) Patentinhaber: **Volkswagen AG**

**W-3180 Wolfsburg 1(DE)**

(72) Erfinder: **Schneider, Arthur, Ing.(Grad.)**
**In den Wiesen 23**
**W-3300 Braunschweig(DE)**

---

## Beschreibung

Beschreibung für folgende Vertragsstaaten : ES, FR, IT

Die Erfindung betrifft ein verfahren zum schalten eines Stufenwechselgetriebes gemäß dem Oberbegriff des Patentanspruchs 1.

Bei allgemein bekannten, herkömmlichen Stufenwechselgetrieben mit einer Getriebeeingangswelle und einer Getriebeausgangswelle, die achsparallel zu der Getriebeeingangswelle angeordnet und über zahnradpaare mit dieser verbindbar ist, muß der vom Antriebsmotor über das Getriebe zu den Fahrzeugrädern reichende Momentenfluß unterbrochen werden, wenn in einen neuen Gang geschaltet werden soll. Die Dauer einer solchen Zugkraftunterbrechung wird bei diesen gattungsbildenden Stufenwechselgetrieben bestimmt durch die für die Synchronisation der formschlüssig miteinander zu verbindenden Getriebeglieder benötigte Zeitspanne.

In der nicht vorveröffentlichten Patentanmeldung DE-A-39 18 170 wird ein Schaltgetriebe beschrieben, bei dem die Dauer der Zugkraftunterbrechung durch eine entsprechende Steuerung und konstruktive Auslegung der formschlüssig miteinander zu verbindenden Getriebeglieder auf ein Minimum reduzierbar ist. Eine solche minimale Dauer der Zugkraftunterbrechung wird mitunter insbesondere dann noch als störend empfunden, wenn während der Beschleunigungsphase eines Fahrzeugs von dem jeweils eingelegten Getriebegang in den nächst höheren Getriebegang geschaltet werden soll. Es ist aus der DE-A-35 30 017 ein lastschaltbares Kraftfahrzeuggetriebe bekannt, das mit einer aufwendigen Hohlwellenkonstruktion und einem Doppelkupplungssystem Schaltvorgänge ohne Unterbrechung der Zugkraft ermöglicht.

Die gattungsgemäße EP-B-0 173 117- zeigt ein Verfahren zum Schalten eines Stufenwechselgetriebes, welches während eines Hochschaltvorgangs für die Dauer der in den jeweiligen Gängen erfolgenden Triebstrangunterbrechung eine übertragung des Antriebsmomentes des Motors über eine zuschaltbare Getriebestufe auf die Fahrzeugräder vorsieht. Dabei erfolgt die Zuschaltung der zuschaltbaren Getriebestufe zeitgleich mit der Triebstrangunterbrechung, so daß während eines Hochschaltvorgangs das Antriebsmoment des Motors jeweils zeitlich nacheinander zunächst von der Getriebestufe des niedrigen Ganges auf die zuschaltbare Getriebestufe und dann auf den höheren Getriebegang zur Erzeugung einer Vortriebskraft übertragen wird.

Vor diesem Hintergrund liegt der Erfindung die Aufgabe zugrunde, das gattungsgemäße Verfahren dahingehend weiterzubilden, daß die Übergänge des Antriebsmomentes von den jeweiligen Getriebegängen auf die zuschaltbare Getriebestufe mit einem möglichst geringen Verlust an Vortriebskraft erfolgen.

Diese Aufgabe wird gelöst durch das kennzeichnende Merkmal des Patentanspruchs 1. Die Unteransprüche enthalten zweckmäßige Ausgestaltungen sowie vorteilhafte Weiterbildungen der Erfindung.

Erfindungsgemäß wird also die zuschaltbare Getriebestufe zur Einleitung eines Hochschaltvorgangs schon dann aktiviert, wenn der alte Getriebegang noch eingelegt ist. Es tritt dann im Stufenwechselgetriebe zunächst eine Verzweigung des Antriebsmoments auf, das heißt, daß ein Teil des Antriebsmomentes noch über den alten Getriebegang übertragen wird, während der verbleibende Teil schon über die zuschaltbare Getriebestufe dem Abtrieb zugeführt wird. Wenn schließlich der eingelegte Getriebegang - beispielsweise nach Unterschreitung eines vorgegebenen Drehmomentenbetrages im Antriebszweig dieses Getriebegangs - ausgerückt wird, überträgt nur noch die zuschaltbare Getriebestufe das Antriebsmoment. Durch eine solche Verzweigung des Antriebsmomentes vor der Unterbreitung des Antriebsstranges wird der Verlust an Vortriebskraft beim Hochschaltvorgang auf ein Minimum reduziert.

Durch das erfindungsgemäße Verfahren sind komfortable Hochschaltvorgänge auch ohne gezielte Beeinflussung des Betriebszustandes des Motors möglich. Auf diese Weise kann die Funktionseinheit des Stufenwechselgetriebes weitgehend selbsttätig gesteuert werden.

Mit Vorteil kann der vorhandene höchste Getriebegang selbst als zuschaltbare Getriebestufe verwendet werden, indem dessen Losrad über eine im Schlupfzustand betreibbare erste Kupplung mit der das Losrad tragenden Getriebewelle verbindbar ist. Eine solche Anordnung weist gegenüber jedem anderen beliebig eingelegten Getriebegang stets ein größeres Übersetzungsverhältnis auf und ist unter Last zuschaltbar.

Eine andere vorteilhafte Ausgestaltung der Erfindung sieht zur Durchführung des Verfahrens eine zuschaltbare Getriebestufe vor, deren Übersetzungsverhältnis stufenlos oder schrittweise verstellbar ist. Das Übersetzungsverhältnis der zuschaltbaren Getrtiebestufe wird dann bei jedem Schaltvorgang von einer Steuereinrichtung so verstellt, daß es immer um einen vorgebbaren Betrag größer ist als der jeweils gerade eingelegte Getriebegang. Auf diese Weise kann innerhalb des Stufenwechselgetriebes während eines beliebigen Hochschaltvorganges der jeweilige Betrag des von der zuschaltbaren Getriebestufe allein übertragbaren Antriebsmomentes an die Beträge der zum Zeitpunkt der Einleitung und Beendigung des Schaltvorganges von den Getriebegängen zu übertragenden Drehmomente angepaßt werden. Dies ist insbesondere im Hinblick auf die Steigerung des Fahrkomforts von besonderer Bedeutung.

Bei einer weiteren vorteilhaften Ausgestaltung der Erfindung ist bei einer zwischen dem Antriebsmotor und dem Stufenwechselgetriebe angeordneten, als Anfahr- und Trennkupplung wirkenden zweiten Kupplung deren Drehmomentenübertragung auf einen vorgebbaren Höchstwert begrenzbar. Eine Ansteuerung dieser zweiten Kupplung in Abhängigkeit vom jeweils eingelegten Getriebegang und/oder vom Antriebsmoment des Motors ermöglicht ebenfalls die zuvor beschriebene Anpassung der im Verlaufe eines Schaltvorganges übertragenen Antriebsmomente und ist darüber hinaus geeignet, die Wärmebelastung der ersten Kupplung zu verringern. Weitere zweckmäßige Ausbildungen für das erfindunsgemäße Stufenwechselgetriebe können den übrigen Unteransprüchen entnommen werden.

Beschreibung für folgende Vertragsstaaten : DE, GB

Die Erfindung betrifft ein Verfahren zum Schalten eines Stufenwechselgetriebes gemäß dem Oberbegriff des Patentanspruchs 1.

Bei allgemein bekannten, herkömmlichen Stufenwechselgetrieben mit einer Getriebeeingangswelle und einer Getriebeausgangswelle, die achsparallel zu der Getriebeeingangswelle angeordnet und über Zahnradpaare mit dieser verbindbar ist, muß der vom Antriebsmotor über das Getriebe zu den Fahrzeugrädern reichende Momentenfluß unterbrochen werden, wenn in einen neuen Gang geschaltet werden soll. Die Dauer einer solchen Zugkraftunterbrechung wird bei diesen gattungsbildenden Stufenwechselgetrieben bestimmt durch die für die Synchronisation der formschlüssig miteinander zu verbindenden Getriebeglieder benötigte Zeitspanne.

In der nicht vorveröffentlichten Patentanmeldung DE-A-39 18 170 wird ein Schaltgetriebe beschrieben, bei dem die Dauer der Zugkraftunterbrechung durch eine entsprechende Steuerung und konstruktive Auslegung der formschlüssig miteinander zu verbindenden Getriebeglieder auf ein Minimum reduzierbar ist. Eine solche minimale Dauer der Zugkraftunterbrechung wird mitunter insbesondere dann noch als störend empfunden, wenn während der Beschleunigungsphase eines Fahrzeugs von dem jeweils eingelegten Getriebegang in den nächst höheren Getriebegang geschaltet werden soll. Es ist aus der DE-A-35 36 017 ein lastschaltbares Kraftfahrzeuggetriebe bekannt, das mit einer aufwendigen Hohlwellenkonstruktion und einem Doppelkupplungssystem Schaltvorgänge ohne Unterbrechung der Zugkraft ermöglicht.

Die gattungsgemäße EP-B-0 173 117 zeigt ein Verfahren zum Schalten eines Stufenwechselgetriebes, welches während eines Hochschaltvorgangs für die Dauer der in den jeweiligen Gängen erfolgenden Triebstrangunterbrechung eine Übertragung des Antriebsmomentes des Motors über eine zuschaltbare Getriebestufe auf die Fahrzeugräder vorsieht. Dabei erfolgt die Zuschaltung der zuschaltbaren Getriebestufe zeitgleich mit der Triebstrangunterbrechung, so daß während eines Hochschaltvorgangs das Antriebsmoment des Motors jeweils zeitlich nacheinander zunächst von der Getriebestufe des niedrigen Ganges auf die zuschaltbare Getriebestufe und dann auf den höheren Getriebegang zur Erzeugung einer Vortriebskraft übertragen wird.

Die ebenfalls nicht vorveröffentlichte EP-A-0 300 792 zeigt als Weiterbildung des gattungsgemäßen Verfahrens einen Schaltvorgang, bei dem die zuschaltbare Getriebestufe zur Einleitung eines Hochschaltvorgangs schon dann aktiviert wird, wenn der alte Getriebegang noch eingelegt ist. Es tritt dann im Stufenwechselgetriebe zunächst eine Verzweigung des Antriebsmomentes auf, das heißt, daß ein Teil des Antriebsmomentes noch über den alten Getriebegang übertragen wird, während der verbleibende Teil schon über die zuschaltbare Getriebestufe dem Abtrieb zugeführt wird. Wenn schließlich der eingelegte Getriebegang - beispielsweise nach Unterschreitung eines vorgegebenen Drehmomentenbetrages im Antriebszweig dieses Getriebegangs - ausgerückt wird, überträgt nur noch die zuschaltbare Getriebestufe das Antriebsmoment. Durch eine solche Verzweigung des Antriebsmomentes vor der Unterbrechung des Antriebsstranges wird der Verlust an Vortriebskraft beim Hochschaltvorgang reduziert.

Vor diesem Hintergrund liegt der Erfindung die Aufgabe zugrunde, das gattungsgemäße Verfahren dahingehend weiterzubilden, daß die Übergänge des Antriebsmomentes von den jeweiligen Getriebegängen auf die zuschaltbare Getriebestufe mit einem möglichst geringen Verlust an Vortriebskraft erfolgen.

Diese Aufgabe wird gelöst durch die Merkmale des Patentanspruchs 1. Die Unteransprüche enthalten zweckmäßige Ausgestaltungen sowie vorteilhafte Weiterbildungen der Erfindung.

Erfindungsgemäß wird also die Schließkraft und die Schließzeit einer in der zuschaltbaren Getriebestufe angeordneten Kupplung so bemessen, daß in der zuschaltbaren Getriebestufe selbst ein Reaktionsmoment erzeugt wird, daß zusätzlich zu dem Motorantriebsmoment von der zuschaltbaren Getriebestufe übertragen wird. Auf diese Weise kann ohne Zugkraftunterbrechung bei allen Schaltvorgängen ein vergleichsweise sanfter Drehmomentenübergang realisiert werden. Es sind somit komfortable Schaltvorgänge auch ohne gezielte Beeinflussung des Betriebszustandes des Motors möglich. Somit kann die Funktionseinheit des Stufenwechselgetriebes weitgehend selbsttätig gesteuert werden.

Eine vorteilhafte Ausgestaltung der Erfindung sieht zur Durchführung des Verfahrens eine zuschaltbare Getriebestufe vor, deren Übersetzungsverhältnis stufenlos oder schrittweise verstellbar ist. Das Übersetzungsverhältnis der zuschaltbaren Getriebestufe wird dann bei jedem Schaltvorgang von einer Steuereinrichtung so verstellt, daß es immer um einen vorgebbaren Betrag größer ist als der jeweils gerade eingelegte Getriebegang. Auf diese Weise kann innerhalb des Stufenwechselgetriebes während eines beliebigen Hochschaltvorganges der jeweilige Betrag des von der zuschaltbaren Getriebestufe allein übertragbaren Antriebsmomentes an die Beträge der zum Zeitpunkt der Einleitung und Beendigung des Schaltvorganges von den Getriebegängen zu übertragenden Drehmomente angepaßt werden. Dies ist insbesondere im Hinblick auf die Steigerung des Fahrkomforts von besonderer Bedeutung.

Bei einer weiteren vorteilhaften Ausgestaltung der Erfindung ist bei einer zwischen dem Antriebsmotor und dem Stufenwechselgetriebe angeordneten, als Anfahr- und Trennkupplung wirkenden zweiten Kupplung deren Drehmomentenübertragung auf einen vorgebbaren Höchstwert begrenzbar. Eine Ansteuerung dieser zweiten Kupplung in Abhängigkeit vom jeweils eingelegten Getriebegang und/oder vom Antriebsmoment des Motors ermöglicht ebenfalls die zuvor beschriebene Anpassung der im Verlaufe eines Schaltvorganges übertragenen Antriebsmomente und ist darüber hinaus geeignet, die Wärmebelastung der ersten Kupplung zu verringern. Weitere zweckmäßige Ausbildungen für das erfindunsgemäße Stufenwechselgetriebe können den übrigen Unteransprüchen entnommen werden.

Die Durchführung des erfindungsgemäßen Verfahrens soll anhand eines im Sinne der Erfindung vorteilhaften Stufenwechselgetriebes mit Hilfe der Zeichnung durch Prinzipskizzen und Diagramme näher erläutert werden. Es zeigt

Figur 1: schematisch den Aufbau eines erfindungsgemäßen Stufenwechselgetriebes,

Figur 2: den Verlauf des an der Getriebeausgangswelle wirksamen Drehmomentes über der Zeit bei maximalem Motorantriebsmoment während verschiedener Hochschaltvorgänge,

Figur 3: den Verlauf des an der Getriebeeingangswelle wirksamen Drehmomentes über der Zeit bei maximalem Motorantriebsmoment während beispielhaft ausgewählter Hochschaltvorgänge,

Figur 4: den Verlauf des an der Getriebeeingangswelle wirksamen Drehmomentes über der Zeit bei maximalem Motorantriebsmoment während eines beispielhaft ausgewählten Hochschaltvorgangs unter besonderer Berücksichtigung der Beeinflussung der Anfahr- und Trennkupplung und

Figur 5: in einem Ausschnitt schematisch den Aufbau eines weiteren erfindungsgemäßen Stufenwechselgetriebes.

Gleiche oder vergleichbare Bauteile und Parameter sind in der Zeichnung gleich beziffert.

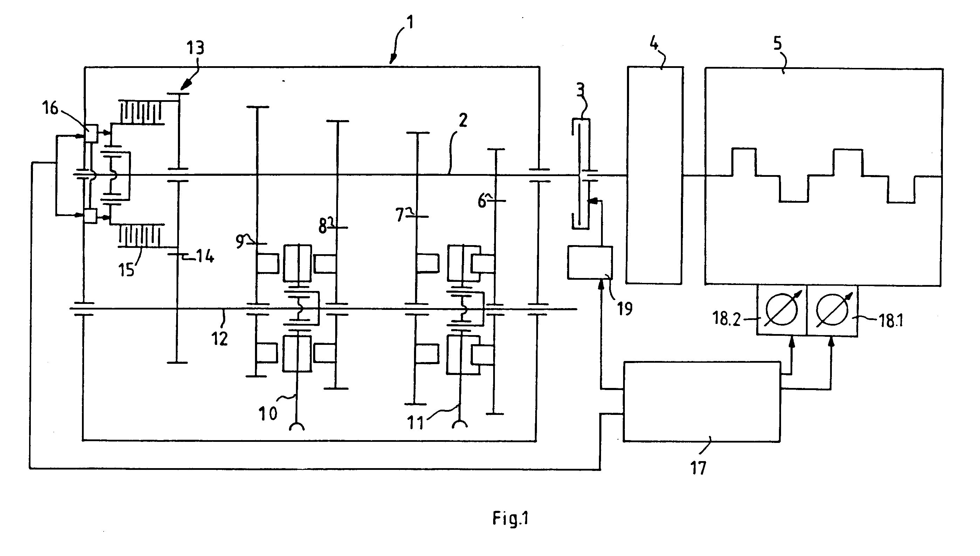

In Figur 1 ist schematisch ein Stufenwechselgetriebe 1 dargestellt, dessen Getriebeeingangswelle 2 über eine Anfahr- und Trennkupplung 3 mit einem eine Schwungmasse 4 aufweisenden Antriebsmotor 5 verbunden ist. Die Getriebeeingangswelle 2 ist über den einzelnen Getriebegängen zugeordneten Paaren von Gangzahnrädern 6 - 9 sowie über Schiebemuffen 10, 11 mit der mit den angetriebenen Fahrzeugrädern in Verbindung stehenden Getriebeausgangswelle 12 verbindbar. Mit 13 ist hier eine zwischen der Getriebeeingangswelle 2 und der Getriebeausgangswelle 12 wirksame zuschaltbare Getriebestufe bezeichnet, die im wesentlichen aus einem dem höchsten Getriebegang zugeordneten Zahnradpaar 14 und einer Lamellenkupplung 15 besteht. Die Lamellenkupplung 15 ist prinzipiell auch durch Konuskupplungen, Magnetkupplungen sowie hydrodynamische oder hydrostatische Kupplungen ersetzbar. Das von der Lamellenkupplung 15 übertragbare Drehmoment ist hier auf einen vorgebbaren Höchstwert einstellbar. Durch die von einer ersten Betätigungseinrichtung 16 beaufschlagbare Lamellenkupplung 15 ist das Losrad des Zahnradpaares 14 mit der Getriebeeingangswelle 2 auch dann verbindbar, wenn - wie in der Zeichnung beispielhaft am ersten Getriebegang (Zahnradpaar 6) dargestellt - innerhalb des Stufenwechselgetriebes 1 bereits eine formschlüssige Verbindung besteht. Grundsätzlich ist es auch möglich, nicht den vorhandenen höchsten Getriebegang 14 als zuschaltbare Getriebestufe auszunutzen, sondern dafür ein zusätzliches Zahnradpaar vorzusehen. Erfindungsgemäß weist das in der Zeichnung dargestellte Ausführungsbeispiel für ein Stufenwechselgetriebe 1 noch eine Steuereinrichtung 17 auf, durch die neben der ersten Betätigungseinrichtung 16 auch eine dem Antriebsmotor 5 zugeordnete Momentenbeeinflussungseinrichtung 18.1 und eine Drehzahlbeeinflussungsrichtung 18.2 sowie eine der Anfahr- und Trennkupplung 3 zugeordnete zweite Betätigungseinrichtung 19 beaufschlagbar sind. Die Funktionsweise des vorstehend beschriebenen Stufenwechselgetriebes 1 wird nun anhand von Diagrammen eingehender erläutert.

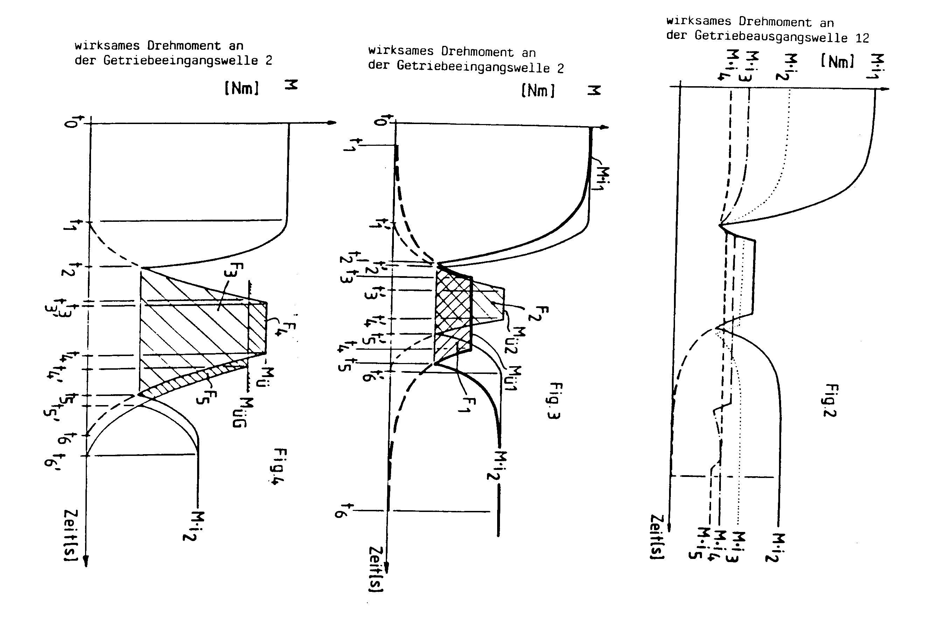

In Figur 2 ist das vom Stufenwechselgetriebe 1 maximal bei Vollast des Antriebsmotors 5 übertragbare Antriebsdrehmoment, also das an Getriebeausgangswelle 12 wirksame Drehmoment, über der Zeit t qualitativ aufgetragen. Die Verläufe sind idealisiert dargestellt, das heißt, daß die während des Betriebes des Stufenwechselgetriebes 1 auftretenden elastischen Verspannungen innerhalb des Triebstranges nicht berücksichtigt werden.

Mit $M \cdot i_1$ bis $M \cdot i_5$ sind die in den jeweiligen Getriebegängen maximal übertragbaren Drehmomente bezeichnet (M = Moment des Antriebsmotors 5; $i_j$ = Übersetzungsverhältnis i im Getriebegang j). Die mit fetten durchgezogenen Linien dargestellten Momentenverläufe zeigen die an einem beispielhaft zu erläuternden Gangwechsel beteiligten Getriebegängen auf. Die maximal übertragbaren Antriebsmomente während anderer Gangwechsel sind demgegenüber mit dünnen unterbrochenen Linien dargestellt.

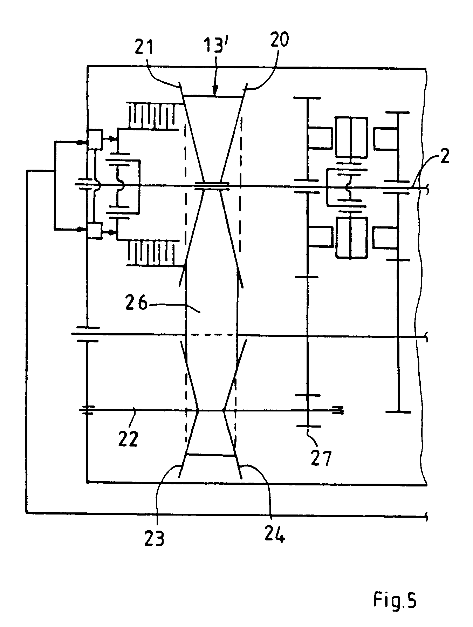

Gemäß Figur 3 ist zum Zeitpunkt $t_0$ also der erste Getriebegang eingelegt. Das vom Antriebsmotor 5 erzeugte Motorantriebsmoment gelangt über die Anfahr- und Trennkupplung 3 auf die Getriebeeingangswelle 2 und wird von dort über das Gangzahnradpaar 6 und die eingerückte Schiebemuffe 11 auf die Getriebeausgangswelle 12 übertragen. Zur Einleitung eines Hochschaltvorganges wird zum Zeitpunkt $t_1$ die Lamellenkupplung 15 der zuschaltbaren Getriebestufe 13 von der ersten Betätigungseinrichtung 16 mit zunehmender Schließkraft beaufschlagt. Der Verlauf des von der Lamellenkupplung übertragenen Drehmoments ist in Figur 3 mit fetten unterbrochenen Linien dargestellt. Aufgrund der in dem Stufenwechselgetriebe 1 vorliegenden Übersetzungsverhältnisse dreht bei eingelegtem ersten Getriebegang das Losrad des Gangzahnrades 14 (höchster Getriebegang) in der zuschaltbaren Getriebestufe 13 langsamer als die Getriebeeingangswelle 2, so daß bei Beaufschlagung der ersten Betätigungseinrichtung 16 die Innenlamellen der Lamellenkupplung 15 eine höhere Drehzahl aufweisen als die mit dem Losrad des Gangzahnradpaars 14 verbundenen Außenlamellen. Es stellt sich somit bei Beaufschlagung der Lamellenkupplung 15 durch die erste Betätigungseinrichtung 16 ein mit Schlupf versehener Reibschluß ein, der geeignet ist, parallel zum noch eingelegten ersten Gebetriebegang ebenfalls Antriebsmomente von der Getriebeeingangswelle 2 auf die Getriebeausgangswelle 12 zu übertragen. Eine Steigerung der von der ersten Betätigungseinrichtung 16 erzeugten Schließkraft bewirkt, daß ein immer größer werdender Anteil des Motormomentes von der zuschaltbaren Getriebestufe 13 reibschlüssig übertragen wird. Zum Zeitpunkt $t_2$ ist das vom ersten Getriebegang übertragene Antriebsmoment so klein geworden, daß die Schiebemuffe 11 zur Aufhebung des Formschlusses ausgerückt werden kann. Bei einem besonders vorteilhaften - in der Zeichnung nicht dargestellten - Ausführungsbeispiel erfolgt dieser Ausrückvorgang durch eine die eingerückte Schiebemuffe 11 mit Vorspannkraft beaufschlagende Feder selbsttätig. Nach einer solchen Unterbrechung des Formschlusses wird zum Zeitpunkt $t_2$ das Motormoment ausschließlich über die zuschaltbare Getriebestufe 13, also den höchsten Getriebgang, übertragen. Durch Beeinflussung der Drehzahl der Schwungmasse 4 kann dann im höchsten Getriebegang dem maximalen Motorantriebsmoment ein Zusatzmoment überlagert werden.

Erfindungsgemäß wird zur Beeinflussung der Schwungmassendrehzahl die Schließkraft und die Schließzeit der Lamellenkupplung 15 so bemessen, daß bei geschlossener Anfahr- und Trennkupplung 3 die für die Synchronisation von Schiebemuffe 11 und Losrad des Gangzahnradpaares 7 (2. Getriebegang) ohnehin notwendige Verzögerung der Getriebeeingangswelle 2 und die damit einhergehende Verzögerung der Schwungmasse 4 in der zuschaltbaren Getriebestufe 13 zu einem Reaktionsmoment führt, das zusätzlich zu dem Motorantriebsmoment vom höchsten Getriebegang übertragen wird. Den Gesetzen der Mechanik folgend führen dabei hohe Schließkräfte und kurze Schließzeiten zu größeren Reaktionsmomenten als kleine Schließkräfte und große Schließzeiten. Zum Zeitpunkt $t_3$ ist somit ein Übergangsdrehmoment $M_{\ddot{u}1}$ einstellbar, das bis zum Zeitpunkt $t_4$ durch die fortlaufende Verzögerung der Schwungmasse 4 aufrechterhalten wird. Der beim Hochschaltvorgang der Schwungmasse 4 ohnehin zu entnehmende Anteil der Rotationsenergie wird aber weitestgehend verlustfrei in Vortriebsenergie umgewandelt.

Bei einem vorteilhaften Ausführungsbeispiel der Erfindung wird während der Verzögerung der Schwungmasse 4 durch die Drehmomentenbeeinflussungsvorrichtung 18.1 das Motormoment reduziert, um die Belastung der Lamellenkupplung 15 zu reduzieren. Es sei nun angenommen, daß zum Zeitpunkt $t_4$ die Schiebemuffe 11 und das Losrad des zweiten Getriebeganges 7 synchron laufen, so daß der zweite Getriebegang durch Einrücken der Schiebemuffe 11 eingelegt werden kann. Unmittelbar nach Einrücken der Schiebemuffe 11 beginnt zum Zeitpunkt $t_5$ der zweite Getriebegang 7, einen Teil des Motormoments zu übertragen und steigert diesen Teil bei gleichzeitigem öffnen der Lamellenkupplung 15 auf den Betrag $M \cdot i_2$. Zum Zeitpunkt $t_6$ ist der Hochschaltvorgang vom ersten in den zweiten Gang abgeschlossen. Die in dem Diagramm schraffiert dargestellte Fläche $F_1$ ist ein Maß für die zur Verzögerung der Schwungmasse 4 von der Lamellenkupplung 15 aufzuwendende Arbeit. Der Verlauf des von dem Stufenwechselgetriebe 1 übertragenen Drehmomentes zeigt, daß beim Hochschalten eine Zugkraftunterbrechung vermieden wird. Es wird jedoch gerade an dem in Figur 2 dargestellten Diagramm deutlich, daß je nach Beaufschlagung der ersten Betätigungseinrichtung 16 vergleichsweise lang andauernde Momenteneinbrüche eintreten können. Nachstehend wird nun beschrieben, wie derartige Momenteneinbrüche beim Hochschalten wesentlich verringert werden können.

Der in Figur 3 mit einer dünnen durchgezogenen Linie dargestellte Verlauf des maximal übertragbaren Antriebsmomentes M über der Zeit t gleicht prinzipiell dem mit einer dicken Linie dargestellten Verlauf. Hinsichtlich der Beeinflussung und Bewegung von Getriebegliedern, die am Schaltvorgang beteiligt sind, treten zu dem Zeitpunkt $t_0$, bis $t_6$, die gleichen Ereignisse ein. Gegenüber dem mit dicken Linien dargestellten Schaltvorgang wurde jedoch die maximale Schließkraft der Lamellenkupplung 15 erhöht und daraus folgend deren Schließzeit verkürzt. Damit wird aus den eingangs genannten Gründen das in der zuschaltbaren Getriebestufe 13 wirkende Reaktionsmoment vergrößert, so daß das letztlich während des Synchronisiervorganges übertragene Übergangsdrehmoment $M_{ü2}$ deutlich größer ist als bei dem mit dicken Linien dargestellten Schaltvorgang. Die schraffiert dargestellte Fläche $F_2$ ist wiederum das Maß der von der Lamellenkupplung 15 für die Verzögerung der Schwungmasse 4 aufzuwendenden Arbeit. Die Flächen $F_1$ und $F_2$ sind gleich groß, wenn bei den in Figur 3 einander gegenübergestellten Verläufen jeweils das gleiche Arbeitsvermögen der Lamellenkupplung 15 zur Verzögerung der Schwungmasse ausgenutzt wird. Von der Steuereinrichtung 17 kann nun die Schließkraft und die Schließzeit der Lamellenkupplung 15 so beeinflußt werden, daß der Betrag des Übergangsmomentes $M_ü$ etwas kleiner ist als das maximal übertragbare Drehmoment des noch eingelegten niedrigeren Ganges und etwas größer ist als das maximal übertragbare Drehmoment des einzulegenden höheren Ganges. Den verbleibenden, äußerst kurzzeitigen Momenteneinbrüche in den Zeitspannen von $t_1$ bis $t_3$ und $t_4$ bis $t_6$ wirken im realen Betrieb des Stufenwechselgetriebes Elastizitäten im Triebstrang zumindest teilweise entgegen. Damit kann ohne Zugkraftunterbrechung beim Hochschalten ein vergleichsweise sanfter Drehmomentenübergang realisiert werden.

Die Einstellung des für einen Hochschaltvorgang günstigsten Übergangsdrehmomentes $M_ü$ kann jedoch auch durch gezielte Beeinflussung der Anfahr- und Trennkupplung 3 erreicht werden. Dies wird anhand des in Figur 4 dargestellten Momentenverlaufes erläutert. Der Ablauf eines Schaltvorganges vom ersten in den zweiten Getriebegang gleicht grundsätzlich dem in Figur 3 dargestellten Verlauf. Lediglich aus Gründen der zeichnerischen Übersichtlichkeit ist das Diagramm in Richtung der Zeitachse gedehnt. Die fett gezeichnete Linie gibt den bereits beschriebenen Momentenverlauf wieder. In der Zeitspanne von $t_3$, bis $t_6$, ergibt sich allerdings ein veränderter Verlauf, der mit einer dünnen Linie gezeichnet ist. Erfindungsgemäß ergibt sich ein derartiger Verlauf, wenn abhängig von Signalen der Steuereinrichtung 17 durch die zweite Betätigungseinrichtung 19 im Verlaufe des Synchronisiervorganges, also während der Verzögerung von Getriebeeingangswelle 2 und Schwungmasse 4, das von der Anfahr- und Trennkupplung 3 übertragbare Drehmoment auf einen Höchstwert $M_{üG}$ begrenzt wird. Eine derartige Beaufschlagung der Anfahr- und Trennkupplung 3 bewirkt, daß die durch die Lamellenkupplung 15 mögliche Momentenübertragbarkeit $M_ü$ nicht vollständig ausgeschöpft wird. Ein Teil der in der Schwungmasse 4 befindlichen Rotationsenergie wird also schon in der Anfahr- und Trennkupplung 3 aufgezehrt. Im Diagramm der Figur 4 entspricht die Summe der Flächen $F_3$ und $F_4$ der von der Lamellenkupplung 15 allein aufzuwendenden Arbeit zur Verringerung der Rotationsenergie. Die Einstellung eines vorgebbaren Höchstwertes bei der Drehmomentenübertragbarkeit der Anfahr- und Trennkupplung 3 hat zur Folge, daß der dem Flächenteil $F_4$ entsprechende Anteil der aufzuwendenden Arbeit von der Anfahr- und Trennkupplung 3 aufgebracht wird. Dieser Flächenanteil $F_4$ ist so groß wie die mit $F_5$ bezeichnete Fläche. Der Vorteil einer derartigen Beaufschlagungsmöglichkeit für die Anfahr- und Trennkupplung 3 besteht darin, daß für die Lamellenkupplung 15 in Bezug auf deren Schließkräfte und Schließzeiten konstante Werte eingestellt werden können. Dies führt für sich betrachtet schon zu einer erheblichen Reduzierung des Steuerungsaufwandes, zumal die in der Regel ohnehin für Anfahrvorgänge vorhandene Betätigungseinrichtung 19 dann auch zur Anpassung des Übergangsdrehmomentes an den jeweiligen Schaltvorgang herangezogen werden kann. Ergänzend oder alternativ kann eine solche Anpassung auch abhängig vom anliegenden Motormoment erfolgen.

Darüber hinaus kann auf diese Weise die thermische Belastung der Lamellenkupplung 15 erheblich herabgesetzt werden.

Die Betätigung der zuschaltbaren Getriebestufe 13 ist jedoch nicht auf Hochschaltvorgänge beschränkt. Insbesondere bei Stufenwechselgetrieben 1 mit selbsttätig ausrückbaren Schiebemuffen 10, 11 ist es zweckmäßig, beim Runterschalten des Stufenwechselgetriebes 1 den Ausrückvorgang der Schiebemuffen 10, 11 durch Beaufschlagung der Lamellenkupplung 15 herbeizuführen. Wenn der eingelegte Getriebegang nicht der höchste Getriebegang ist, bewirkt die Beaufschlagung der Lamellenkupplung 15 durch die erste Betätigungseinrichtung 16 bei noch eingelegtem höheren Gang einen Reibschluß zwischen dem Losrad des höchsten Getriebeganges 14 und der Getriebeeingangswelle 2. Wie schom beim Hochschaltvorgang beschrieben übernimmt die zuschaltbare Getriebestufe 13 mit zunehmender Beaufschlagung durch die Betätigungseinrichtung 16 einen wachsenden Anteil des Motormomentes, bis innerhalb des eingelegten Getriebeganges aufgrund des sich dort entsprechend verringernden Drehmomentes ein den Ausrückvorgang ermöglichender Drehmomentenbetrag erreicht ist. Unmittelbar nach dem Ausrückvorgang des zuvor eingelegten höheren Getriebeganges ist die Lamellenkupplung 15 schnellstens zu öffnen, damit die Getriebeeingangswelle 2 für die Synchronisation des einzulegenden niedrigeren Getriebeganges möglichst rasch beschleunigt werden kann. Zweckmäßigerweise erfolgt die Beschleunigung der Getriebeeingangswelle 2 bei geschlossener Anfahr- und Trennkupplung 3 durch den Antriebsmotor 5, dessen Drehzahl in Abhängigkeit von den Signalen der Steuereinheit 17 durch die Drehzahlbeeinflussungsvorrichtung 18.2 steuerbar ist. Ist die für den Synchronlauf der formschlüssig miteinander zu verbindenden Getriebeglieder notwendige Drehzahl der Getriebeeingangswelle 2 zumindest annähernd erreicht, erfolgt eine nochmalige Beaufschlagung der Lamellenkupplung 15 durch die erste Betätigungseinrichtung 16. Auf diese Weise kann die zuvor beschleunigte Getriebeeingangswelle 2 gebremst werden, damit ein problemloser Formschluß zwischen Losrad des neuen Ganges und Schiebemuffe erfolgen kann. Nach Herstellung der formschlüssigen Verbindung wird die Lamellenkupplung 15 dann wieder geöffnet. Damit ist der Rückschaltvorgang abgeschlossen.

Eine gesonderte Betrachtung erfordert das Rückschalten aus dem höchsten Getriebegang. Beim Schalten vom höchsten in den nächst niedrigen Getriebegang wird zunächst die Lamellenkupplung 15 geöffnet und erst dann wieder mit Schließkraft beaufschlagt, wenn die Getriebeeingangswelle 2 zumindest annähernd bis zum Synchronlauf der in dem nächst niedrigen Getriebegang formschlüssig miteinander zu verbindenden Getriebeglieder durch den Antriebsmotor 5 beschleunigt worden ist. Nach dem Einrücken der Schiebemuffe 10 in das Losrad des nächst niedrigen Getriebeganges 9 wird die Kupplung 15 wieder geöffnet.

Das in Figur 5 gezeigte Ausführungsbeispiel zeigt ausschnittsweise ein Stufenwechselgetriebe 1', bei dem abweichend von dem in Figur 1 gezeigten Ausführungsbeispiel die Losräder auf der Getriebeeingangswelle 2 und die Festräder auf der Getriebeausgangswelle 12 angeordnet sind. Die wesentliche Änderung zum Stufenwechselgetriebe 1 besteht jedoch darin, daß die zuschaltbare Getriebestufe 13' nach der Art eines Riemenscheibenantriebs ausgebildet ist. Zu diesem Zweck sind auf der Getriebeeingangswelle 2 zwei Riemenscheibenhälften 20, 21 als Losräder und auf einer Zwischenwelle 22 zwei Riemenscheibenhälften 23, 24 als Festräder angeordnet, die über einen Riemen 26 miteinander verbunden sind. Ein auf der Zwischenwelle 22 drehfest angeordnetes Ritzel 27 kämmt mit dem Abtriebsritzel des Gangzahnradpaares 9 (4. Gang) und ermöglicht so die für den ordnungsgemäßen Antrieb der Getriebeausgangswelle 12 erforderliche Umkehr der Drehrichtung.

Durch eine an sich bekannte axiale Verstellung der Riemenscheibenhälften 20, 21 einerseits und 23, 24 andererseits ist das Übersetzungsverhältnis der zuschaltbaren Getriebestufe 13' stufenlos einstellbar. Analog zum Stufenwechselgetriebe 1 sind die hier als Losräder umlaufenden Riemenscheibenhälften 20, 21 über die Lamellenkupplung 15 mit der Getriebeeingangswelle 2 verbindbar. Durch die stufenlose Verstellbarkeit des Übersetzungsverhältnisses in der zuschaltbaren Getriebestufe 13' kann während eines beliebigen Hochschaltvorgangs der jeweilige Betrag des von der zuschaltbaren Getriebestufe allein zu übertragenden Antriebsmomentes an die Beträge der zum Zeitpunkt der Einleitung und Beendigung des Schaltvorganges von den Getrieberädern zu übertragenden Antriebsmomente angepaßt werden. Mit Bezug auf Figur 2 heißt dies also, daß beispielsweise beim Schalten vom ersten in den zweiten Gang der Betrag des Übergangsmomentes $M_{\ddot{u}}$ durch Verstellung am Riemenscheibenantrieb an die Beträge $M \cdot i_1$ und $M \cdot i_2$ anpaßbar ist.

Bei einer - in der Zeichnung nicht dargestellten - vorteilhaften Variante des Stufenwechselgetriebes 1' sind die Riemenscheibenhälften 20, 21 auf der Getriebeeingangswelle 2 als Festräder angeordnet. Dabei sind die Riemenscheibenhälften 20, 21 derart auf der Getriebeeingangswelle 2 axial verstellbar, daß von dem Riemen 26 zumindest zeitweise kein Antriebsmoment übertragbar ist, und daß der Grad des Riemeneingriffs veränderbar ist. Die Funktion der Lamellenkupplung 15 wird somit durch das Zusammenwirken der Riemenscheibenhälften 20, 21 mit dem Riemen 26 ersetzt.

**Patentansprüche**

**Patentansprüche für folgende Vertragsstaaten : ES, FR, IT**

1.   Verfahren zum Schalten eines Stufenwechselgetriebes (1) für Fahrzeuge mit
   - einer mit einem Antriebsmotor (5) verbindbaren Getriebeeingangswelle (2),
   - einer mit den angetriebenen Fahrzeugrädern verbindbaren Getriebeausgangswelle (12),

- mehreren, den einzelnen Getriebegängen zugeordneten Paaren von Gangzahnrädern (6 bis 9), von denen jeweils eines als Festrad auf der einen Getriebewelle und das andere als Losrad auf der anderen Getriebewelle gehalten ist, wobei das Losrad zum Zwecke des Einrückens des entsprechenden Getriebeganges form- und/oder reibschlüssig mit der zugehörigen Getriebewelle verbindbar ist,
- einer zuschaltbaren Getriebestufe (13), die zwischen der Getriebeeingangswelle (2) und der Getriebeausgangswelle (12) angeordnet ist, und die innerhalb des Stufenwechselgetriebes verglichen mit dem jeweils eingelegten Getriebegang ein kleineres Übersetzungsverhältnis ($n_{ein}/n_{aus}$) aufweist,

dadurch gekennzeichnet, daß die zuschaltbare Getriebestufe (13) zur Einleitung eines Schaltvorganges zumindest zeitweise auch dann zugeschaltet wird, wenn der jeweils eingelegte Getriebegang noch nicht ausgerückt ist.

2. Stufenwechselgetriebe zur Durchführung des Verfahrens nach Anspruch 1, mit
- einer mit einem Antriebsmotor (5) verbindbaren Getriebeeingangswelle (2),
- einer mit den angetriebenen Fahrzeugrädern verbindbaren Getriebeausgangswelle (12),
- mehreren, den einzelnen Getriebegängen zugeordneten Paaren von Gangzahnrädern (6 bis 9), von denen jeweils eines als Festrad auf der einen Getriebewelle und das andere als Losrad auf der anderen Getriebewelle gehalten ist, wobei das Losrad zum Zwecke des Einrückens des entsprechenden Getriebeganges form- und/oder reibschlüssig mit der zugehörigen Getriebewelle verbindbar ist,
- einer zuschaltbaren Getriebestufe (13), die zwischen der Getriebeeingangswelle (2) und der Getriebeausgangswelle (12) angeordnet ist, und die innerhalb des Stufenwechselgetriebe (1) der höchste Getriebegang (14) des Stufenwechselgetriebes (1) ist,
- einer im Schlupfzustand betreibbaren ersten Kupplung (15), über die das Losrad des höchsten Getriebeganges (14) mit der das Losrad tragenden Getriebewelle (2) verbindbar ist,

dadurch gekennzeichnet, daß die zuschaltbare Getriebestufe (13) zur Einleitung eines Schaltvorganges zumindest zeitweise auch dann zugeschaltet ist, wenn der jeweils eingelegte Getriebegang noch nicht ausgerückt ist.

3. Verfahren nach Anspruch 1 unter Verwendung eines Stufenwechselgetriebes nach Anspruch 2, dadurch gekennzeichnet, daß das von der ersten Kupplung (15) übertragbare Drehmoment auf einen vorgebbaren Höchstwert begrenzt wird.

4. Verfahren nach Anspruch 1 unter Verwendung eines Stufenwechselgetriebes nach Anspruch 2, dadurch gekennzeichnet, daß die Betätigung der ersten Kupplung (15) von einer Steuereinrichtung (17) sowohl hinsichtlich der Öffnungs- und Schließgeschwindigkeit als auch hinsichtlich der Schließkraft in der Weise gesteuert wird, daß in der zuschaltbaren Getriebestufe (13) zusätzlich zu dem Antriebsmoment des Antriebsmotors (5) ein Reaktionsmoment vom höchsten Getriebegang übertragen wird.

5. Verfahren nach mindestens einem der Ansprüche 1, 3 oder 4, dadurch gekennzeichnet, daß beim Hochschalten die erste Kupplung mit einer gesteuert zunehmenden Schließkraft derart beaufschlagt wird, daß mit Zunahme der Schließkraft ein wachsender Anteil des zu übertragenden Drehmoments über die erste Kupplung (15) durch die zuschaltbare Getriebestufe (13) übertragen wird, bis innerhalb des eingelegten Getriebeganges aufgrund des sich dort entsprechend verringernden Drehmomentes ein den Ausrückvorgang ermöglichender Drehmomentbetrag erreicht wird, und daß die erste Kupplung (15) nach dem Ausrückvorgang zur Verzögerung der Getriebeeingangswelle (2) bis zum synchronlauf der in dem einzulegenden höheren Getriebegang formschlüssig miteinander zu verbindenden Getriebeglieder mit Schließkraft beaufschlagt bleibt, und daß die erste Kupplung (15) nach dem Herstellen des Formschlusses in dem höheren Getriebegang in Öffnungsrichtung betätigt wird, sofern der neu eingelegte Getriebegang nicht der höchste Getriebegang (14) ist.

6. Verfahren nach Anspruch 5, dadurch gekennzeichnet, daß durch eine dem Antriebsmotor (5) zugeordnete Drehmomentenbeeinflussungsvorrichtung (18.1) in Abhängigkeit von Signalen der Steuereinrichtung (17) nach dem Ausrücken des eingelegten Getriebeganges das Motordrehmoment reduziert wird, bis in dem einzulegenden höheren Getriebegang zumindest annähernd der Synchronlauf der formschlüssig miteinander zu verbindenden Getriebeglieder erreicht ist.

7. Verfahren nach mindestens einem der Ansprüche 1, 3 oder 4, dadurch gekennzeichnet, daß, sofern der eingelegte Getriebegang nicht der höchste Getriebegang (14) ist, beim Rückschalten die erste Kupplung (15) derart mit einer gesteuert zunehmenden Schließkraft beaufschlagt wird, daß mit Zunahme der Schließkraft ein wachsender Anteil des zu übertragenden Drehmoments über die erste Kupplung (15) durch die zuschaltbare Getriebestufe (13) übertragen wird, bis innerhalb des eingelegten Getriebeganges aufgrund des sich dort entsprechend verringernden Drehmomentes ein den Ausrückvorgang ermöglichender Drehmomentenbetrag erreicht ist, und daß die erste Kupplung (15) unmittelbar nach dem Ausrückvorgang geöffnet wird und erst dann wieder mit Schließkraft beaufschlagt wird, wenn die Getriebeeingangswelle (2) zumindest annähernd bis zum Synchronlauf der in dem einzulegenden niedrigeren Getriebegang formschlüssig miteinander zu verbindenden Getriebeglieder durch ein Beschleunigungsmittel beschleunigt worden ist, und daß die erste Kupplung (15) unmittelbar nach Herstellung der formschlüssigen Verbindung wieder geöffnet wird.

8. Verfahren nach mindestens einem der Ansprüche 1, 3 oder 4, dadurch gekennzeichnet, daß beim Rückschalten aus dem höchsten Getriebegang (14) die mit Schließkraft beaufschlagte erste Kupplung (15) in Öffnungsrichtung betätigt wird und erst dann wieder mit Schließkraft beaufschlagt wird, wenn die Getriebeeingangswelle (2) zumindest annähernd bis zum Synchronlauf der in dem einzulegenden niedrigeren Getriebegang formschlüssig miteinander zu verbindenden Getriebeglieder durch ein Beschleunigungsmittel beschleunigt worden ist, und daß die erste Kupplung (15) unmittelbar nach Herstellung der formschlüssigen Verbindung der Getriebeglieder wieder geöffnet wird.

9. Stufenwechselgetriebe nach Anspruch 2 zur Durchführung des Verfahrens nach den Ansprüchen 7 oder 8, dadurch gekennzeichnet, daß das Beschleunigungsmittel der Antriebsmotor (5) ist.

10. Stufenwechselgetriebe nach Anspruch 2 zur Durchführung des Verfahrens nach mindestens einem der Ansprüche 5 bis 8, dadurch gekennzeichnet, daß die jeweiligen Losräder der den einzelnen Getriebegängen zugeordneten Paare von Gangzahnrädern mittels selbsttätig ausrückbarer Schiebemuffen (10, 11) mit der zugehörigen Getriebewelle form- und/oder reibschlüssig verbindbar sind.

11. Verfahren nach Anspruch 5, dadurch gekennzeichnet, daß bei einer zwischen dem Antriebsmotor (5) und dem Stufenwechselgetriebe (1) angeordneten, als Anfahr- und Trennkupplung wirkenden zweiten Kupplung (3) deren Drehmomentenübertragung auf einen vorgebbaren Höchstwert begrenzt wird, wenn nach Aufhebung des Formschlusses in dem eingelegten höheren Getriebegang zur Verzögerung der Getriebeeingangswelle (2) die erste Kupplung (15) bis zum Synchronlauf der in dem einzulegenden niedrigeren formschlüssig miteinander zu verbindenden Getriebeglieder mit Schließkraft beaufschlagt wird.

12. Verfahren nach Anspruch 11, dadurch gekennzeichnet, daß der vorgebbare Höchstwert für die Drehmomentenübertragung der zweiten Kupplung (3) abhängig vom jeweils eingelegten Getriebegang und/oder vom Antriebsmoment des Motors durch die Steuereinheit (17) eingestellt wird.

13. Stufenwechselgetriebe nach Anspruch 2, dadurch gekennzeichnet, daß die zuschaltbare Getriebestufe eine stufenlose oder schrittweise Verstellbarkeit des Übersetzungsverhältnisses ($n_{ein}/n_{aus}$) aufweist.

14. Stufenwechselgetriebe nach Anspruch 13, dadurch gekennzeichnet, daß die zuschaltbare Getriebestufe ein Riemenscheibenantrieb ist, der eine drehfeste Riemenscheibe und eine verdrehbare Riemenscheibe aufweist, und bei dem die verdrehbare Riemenscheibe über eine im Schlupfzustand betreibbare erste Kupplung mit der die verdrehbare Riemenscheibe tragenden Getriebewelle verbindbar ist.

15. Stufenwechselgetriebe nach Anspruch 13, dadurch gekennzeichnet, daß die zuschaltbare Getriebestufe ein Riemenscheibenantrieb ist, der eine auf der Getriebeeingangswelle (2) drehfest angeordnete erste Riemenscheibe (20, 21) und eine auf einer Zwischenwelle (22) drehfest angeordnete zweite Riemenscheibe (23, 24) aufweist, wobei die Zwischenwelle (22) über eine Zwischengetriebestufe (Ritzel 27) mit der Getriebeausgangswelle (12) verbunden ist.

16. Stufenwechselgetriebe nach Anspruch 15, dadurch gekennzeichnet, daß die Riemenscheiben derart verstellbar sind, daß von dem Riemen (26) zumindest zeitweise kein Drehmoment übertragbar ist, und daß der Grad des Riemeneingriffs veränderbar ist.

**17.** Stufenwechselgetriebe nach Anspruch 13, dadurch gekennzeichnet, daß die Verstellung des Übersetzungsverhältnisses in Abhängigkeit von dem Übersetzungsverhältnis des jeweils eingelegten Getriebeganges erfolgt.

**18.** Stufenwechselgetriebe nach Anspruch 2 oder 13, dadurch gekennzeichnet, daß die erste Kupplung eine hilfskraftbetätigte Reibkupplung ist.

**19.** Stufenwechselgetriebe nach Anspruch 17, dadurch gekennzeichnet, daß die Reibkupplung eine Lamellenkupplung ist.

**20.** Stufenwechselgetriebe nach Anspruch 17, dadurch gekennzeichnet, daß die Reibkupplung eine Konuskupplung ist.

**21.** Stufenwechselgetriebe nach Anspruch 2 oder 13, dadurch gekennzeichnet, daß die erste Kupplung eine Magnetkupplung ist.

**22.** Stufenwechselgetriebe nach Anspruch 2 oder 13, dadurch gekennzeichnet, daß die erste Kupplung eine hydrodynamische Drehmomentenübertragbarkeit aufweist.

**23.** Stufenwechselgetriebe nach Anspruch 2 oder 13, dadurch gekennzeichnet, daß die erste Kupplung eine hydrostatische Drehmomentenübertragbarkeit aufweist.

**Patentansprüche für folgende Vertragsstaaten : DE, GB**

**1.** Verfahren zum Schalten eines Stufenwechselgetriebes (1) für Fahrzeuge mit
- einer mit einem Antriebsmotor (5) verbindbaren Getriebeeingangswelle (2),
- einer mit den angetriebenen Fahrzeugrädern verbindbaren Getriebeausgangswelle (12),
- mehreren, den einzelnen Getriebegängen zugeordneten Paaren von Gangzahnrädern (6 bis 9), von denen jeweils eines als Festrad auf der einen Getriebewelle und das andere als Losrad auf der anderen Getriebewelle gehalten ist, wobei das Losrad zum Zwecke des Einrückens des entsprechenden Getriebeganges form- und/oder reibschlüssig mit der zugehörigen Getriebewelle verbindbar ist,
- einer zuschaltbaren Getriebestufe (13), die zwischen der Getriebeeingangswelle (2) und der Getriebeausgangswelle (12) angeordnet und als der höchste Getriebegang (14) des Stufenwechselgetriebes (1) ausgebildet ist, wobei das Losrad des höchsten Getriebeganges (14) über eine im Schlupfzustand betreibbare erste Kupplung (15) mit der das Losrad tragenden Getriebewelle (2) verbindbar ist, dadurch gekennzeichnet, daß die zuschaltbare Getriebestufe (13) zur Einleitung eines Schaltvorganges zumindest zeitweise auch dann zugeschaltet wird, wenn der jeweils eingelegte Getriebegang noch nicht ausgerückt ist, und daß die Betätigung der ersten Kupplung (15) von einer Steuereinrichtung (17) sowohl hinsichtlich der Öffnungs- und Schließgeschwindigkeit als auch hinsichtlich der Schließkraft in der Weise gesteuert wird, daß die zuschaltbare Getriebestufe (13) ein Übergangsdrehmoment überträgt, das bezogen auf die bei einem Gangwechsel jeweils beteiligten Getriebegänge dem Betrage nach im Vergleich zu den in diesen Getriebegängen maximal übertragbaren Drehmomenten einen Zwischenwert einnimmt.

**2.** Verfahren nach Anspruch 1, dadurch gekennzeichnet, daß das von der ersten Kupplung (15) übertragbare Drehmoment auf einen vorgebbaren Höchstwert begrenzt wird.

**3.** Verfahren nach einem der Ansprüche 1 und/oder 2, dadurch gekennzeichnet, daß beim Hochschalten die erste Kupplung (15) mit einer gesteuert zunehmenden Schließkraft derart beaufschlagt wird, daß mit Zunahme der Schließkraft ein wachsender Anteil des zu übertragenden Drehmoments über die erste Kupplung (15) durch die zuschaltbare Getriebestufe (13) übertragen wird, bis innerhalb des eingelegten Getriebeganges aufgrund des sich dort entsprechend verringernden Drehmomentes ein den Ausrückvorgang ermöglichender Drehmomentbetrag erreicht wird, und daß die erste Kupplung (15) nach dem Ausrückvorgang zur Verzögerung der Getriebeeingangswelle (2) bis zum Synchronlauf der in dem einzulegenden höheren Getriebegang formschlüssig miteinander zu verbindenden Getriebeglieder mit Schließkraft beaufschlagt bleibt, und daß die erste Kupplung (15) nach dem Herstellen des Formschlusses in dem höheren Getriebegang in Öffnungsrichtung betätigt wird, sofern der neu eingelegte Getriebegang nicht der höchste Getriebegang (14) ist.

**4.** Verfahren nach Anspruch 3, dadurch gekennzeichnet, daß durch eine dem Antriebsmotor zugeordnete Drehmomentenbeeinflussungsvorrichtung (18.1) in Abhängigkeit von Signalen der Steuereinrichtung (17) nach dem Ausrücken des eingelegten Getriebeganges das Motordrehmoment reduziert wird, bis in dem einzulegenden höheren Getriebegang zumindest annähernd der Synchronlauf der formschlüssig miteinander zu verbindenden Getriebeglieder erreicht ist.

5. Verfahren nach einem der Ansprüche 1 und/oder 2, dadurch gekennzeichnet, daß, sofern der eingelegte Getriebegang nicht der höchste Getriebegang (14) ist, beim Rückschalten die erste Kupplung (15) derart mit einer gesteuert zunehmenden Schließkraft beaufschlagt wird, daß mit Zunahme der Schließkraft ein wachsender Anteil des zu übertragenden Drehmoments über die erste Kupplung (15) durch die zuschaltbare Getriebestufe (13) übertragen wird, bis innerhalb des eingelegten Getriebeganges aufgrund des sich dort entsprechend verringernden Drehmomentes ein den Ausrückvorgang ermöglichender Drehmomentenbetrag erreicht ist, und daß die erste Kupplung (15) unmittelbar nach dem Ausrückvorgang geöffnet wird und erst dann wieder mit Schließkraft beaufschlagt wird, wenn die Getriebeeingangswelle (2) zumindest annähernd bis zum Synchronlauf der in dem einzulegenden niedrigeren Getriebegang formschlüssig miteinander zu verbindenden Getriebeglieder durch ein Beschleunigungsmittel beschleunigt worden ist, und daß die erste Kupplung (15) unmittelbar nach Herstellung der formschlüssigen Verbindung wieder geöffnet wird.

6. Verfahren nach mindestens einem der Ansprüche 1 und/oder 2, dadurch gekennzeichnet, daß beim Rückschalten aus dem höchsten Getriebegang (14) die mit Schließkraft beaufschlagte erste Kupplung (15) in Öffnungsrichtung betätigt wird und erst dann wieder mit Schließkraft beaufschlagt wird, wenn die Getriebeeingangswelle (2) zumindest annähernd bis zum Synchronlauf der in dem einzulegenden niedrigeren Getriebegang formschlüssig miteinander zu verbindenden Getriebeglieder durch ein Beschleunigungsmittel beschleunigt worden ist, und daß die erste Kupplung (15) unmittelbar nach Herstellung der formschlüssigen Verbindung der Getriebeglieder wieder geöffnet wird.

7. Stufenwechselgetriebe zur Durchführung des Verfahrens nach mindestens einem der Ansprüche 1 bis 6 mit
  - einer mit einem Antriebsmotor (5) verbindbaren Getriebeeingangswelle (2),
  - einer mit den angetriebenen Fahrzeugrädern verbindbaren Getriebeausgangswelle (12),
  - mehreren, den einzelnen Getriebegängen zugeordneten Paaren von Gangzahnrädern (6 bis 9), von denen jeweils eines als Festrad auf der einen Getriebewelle und das andere als Losrad auf der anderen Getriebewelle gehalten ist, wobei das Losrad zum Zwecke des Einrückens des entsprechenden Getriebeganges form- und/oder reibschlüssig mit der zugehörigen Getriebewelle verbindbar ist,
  - einer zuschaltbaren Getriebestufe (13), die zwischen der Getriebeeingangswelle (2) und der Getriebeausgangswelle (12) angeordnet und als der höchste Getriebegang des Stufenwechselgetriebes (1) ausgebildet ist, wobei das Losrad des höchsten Getriebeganges (14) über eine im Schlupfzustand betreibbare erste Kupplung (15) mit der das Losrad tragenden Getriebewelle (2) verbindbar ist,
dadurch gekennzeichnet, daß die Losräder der einzelnen Getriebegänge (Paare von Gangzahnrädern 6 bis 9) über selbsttätig ausrückbare Schiebemuffen (10; 11) form- und/oder reibschlüssig mit der zugehörigen Getriebewelle verbindbar sind.

8. Stufenwechselgetriebe nach Anspruch 7, dadurch gekennzeichnet, daß das Beschleunigungsmittel, das mit der Getriebeeingangswelle (2) verbindbar ist, der Antriebsmotor (5) ist.

9. Verfahren nach Anspruch 3, dadurch gekennzeichnet, daß bei einer zwischen dem Antriebsmotor (5) und dem Stufenwechselgetriebe (1) angeordneten, als Anfahr- und Trennkupplung wirkenden zweiten Kupplung (3) deren Drehmomentenübertragung auf einen vorgebbaren Höchstwert begrenzt wird, wenn nach Aufhebung des Formschlusses in dem eingelegten höheren Getriebegang zur Verzögerung der Getriebeeingangswelle (2) die erste Kupplung (15) bis zum Synchronlauf der in dem einzulegenden niedrigeren formschlüssig miteinander zu verbindenden Getriebeglieder mit Schließkraft beaufschlagt wird.

10. Verfahren nach Anspruch 9, dadurch gekennzeichnet, daß der vorgebbare Höchstwert für die Drehmomentenübertragung der zweiten Kupplung (3) abhängig vom jeweils eingelegten Getriebegang und/oder vom Antriebsmoment des Antriebsmotors (5) durch die Steuereinheit (17) eingestellt wird.

11. Stufenwechselgetriebe zur Durchführung des Verfahrens nach Anspruch 1 mit

- einer mit einem Antriebsmotor (5) verbindbaren Getriebeeingangswelle (2),
- einer mit den angetriebenen Fahrzeugrädern verbindbaren Getriebeausgangswelle (12),
- mehreren, den einzelnen Getriebegängen zugeordneten Paaren von Gangzahnrädern (6 bis 9), von denen jeweils eines als Festrad auf der einen Getriebewelle und das andere als Losrad auf der anderen Getriebewelle gehalten ist, wobei das Losrad zum Zwecke des Einrückens des entsprechenden Getriebeganges form- und/oder reibschlüssig mit der zugehörigen Getriebewelle verbindbar ist,
- einer zuschaltbaren Getriebestufe (13), die zwischen der Getriebeeingangswelle (2) und der Getriebeausgangswelle (12) angeordnet ist,

dadurch gekennzeichnet, daß die zuschaltbare Getriebestufe eine stufenlose oder schrittweise Verstellbarkeit des Übersetzungsverhältnisses ($n_{ein}/n_{aus}$) aufweist.

12. Stufenwechselgetriebe nach Anspruch 11, dadurch gekennzeichnet, daß die zuschaltbare Getriebestufe ein Riemenscheibenantrieb ist, der eine drehfeste Riemenscheibe und eine verdrehbare Riemenscheibe aufweist und bei dem die verdrehbare Riemenscheibe über eine im Schlupfzustand betreibbare erste Kupplung mit der die verdrehbare Riemenscheibe tragenden Getriebewelle verbindbar ist.

13. Stufenwechselgetriebe nach Anspruch 11, dadurch gekennzeichnet, daß die zuschaltbare Getriebestufe ein Riemenscheibenantrieb ist, der eine auf der Getriebeeingangswelle (2) drehfest angeordnete erste Riemenscheibe (20, 21) und eine auf einer Zwischenwelle (22) drehfest angeordnete zweite Riemenscheibe (23, 24) aufweist, wobei die Zwischenwelle (22) über eine Zwischengetriebestufe (Ritzel 27) mit der Getriebeausgangswelle (12) verbunden ist.

14. Stufenwechselgetriebe nach Anspruch 13, dadurch gekennzeichnet, daß die Riemenscheiben derart verstellbar sind, daß von dem Riemen (26) zumindest zeitweise kein Drehmoment übertragbar ist, und daß der Grad des Riemeneingriffs veränderbar ist.

15. Stufenwechselgetriebe nach Anspruch 11, dadurch gekennzeichnet, daß die Verstellung des Übersetzungsverhältnisses ($n_{ein}/n_{aus}$) in Abhängigkeit von dem Übersetzungsverhältnis des jeweils eingelegten Getriebeganges erfolgt.

16. Stufenwechselgetriebe nach wenigstens einem der Ansprüche 7, 8 oder 11, dadurch gekennzeichnet, daß die erste Kupplung eine hilfskraftbetätigte Reibkupplung ist.

17. Stufenwechselgetriebe nach Anspruch 15, dadurch gekennzeichnet, daß die Reibkupplung eine Lamellenkupplung ist.

18. Stufenwechselgetriebe nach Anspruch 15, dadurch gekennzeichnet, daß die Reibkupplung eine Konuskupplung ist.

19. Stufenwechselgetriebe nach wenigstens einem der Ansprüche 7, 8 oder 11, dadurch gekennzeichnet, daß die erste Kupplung eine hydrodynamische Drehmomentenübertragbarkeit aufweist.

20. Stufenwechselgetriebe nach wenigstens einem der Ansprüche 7, 8 oder 11, dadurch gekennzeichnet, daß die erste Kupplung eine hydrostatische Drehmomentenübertragbarkeit aufweist.

**Claims**
**Claims for the following Contracting States : ES, FR, IT**

1. A method for gear changing a stepped change speed gearbox (1) for motor vehicles having
   - a transmission input shaft (2) which can be connected to a drive motor (5),
   - a transmission output shaft (12) which can be connected to the motor-driven vehicle wheels,
   - several pairs of toothed gear wheels (6 to 9) allocated to the individual gears and in each case one of the toothed gear wheels being held as a fixed wheel on the one transmission shaft and the other as a loose wheel on the other transmission shaft and for the purpose of engaging the corresponding gear, the loose wheel can be connected in a form-locking and/or friction-tight manner to the associated transmission shaft,
   - a connectable gear stage (13), which is arranged between the transmission input shaft (2) and the transmission output shaft (12) and which had within the stepped change speed gearbox a smaller conversion ratio ($n_{in}/n_{out}$) in comparison with the respective engaged gear,

characterised in that the connectable gear stage (13) is, for the purpose of initiating a gear change, at least at times connected even when the respective engaged gear has not yet been disengaged.

2. A stepped change speed gearbox for carrying out the method as claimed in claim 1, having
    - a transmission input shaft (2) which can be connected to a drive motor (5),
    - a transmission output shaft (12) which can be connected to the motor-driven vehicle wheels,
    - several pairs of toothed gear wheels (6 to 9) allocated to the individual gears and in each case one of the toothed gear wheels is held as a fixed wheel on the one transmission shaft and the other as a loose wheel on the other transmission shaft and for the purpose of engaging the corresponding gear, the loose wheel can be connected in a form-locking and/or friction-tight manner to the associated transmission shaft.
    - a connectable gear stage (13) which is arranged between the transmission input shaft (2) and the transmission output shaft (12) and which within the stepped change speed gearbox (1) is the highest gear (14) of the stepped change speed gearbox (1),
    - a first clutch (15) which can be driven in the slip condition and by means of which, the loose wheel of the highest gear (14) can be connected to the drive shaft (2) carrying the loose wheel,

characterised in that the connectable gear stage (13) is, for the purpose of initiating a gear change, at least at times connected even when the respective engaged gear has not yet been disengaged.

3. A method as claimed in claim 1 using a stepped change speed gearbox as claimed in claim 2, characterised in that the torque which can be transmitted to the first clutch (15) is limited to a maximum predeterminable value.

4. A method as claimed in claim 1 using a stepped change speed gearbox as claimed in claim 2, characterised in that the actuation of the first clutch (15) is controlled by a control device (17) both with regard to the opening and closing rate and with regard to the closing force in such a way that in the connectable gear stage (13) in addition to the driving torque of the drive motor (5) a reaction moment is transmitted by the highest gear.

5. A method as claimed in at least one of claims 1, 3 or 4, characterised in that when changing up gear, the first clutch is acted upon by a controlled and increasing closing force in such a way that when increasing the closing force, an increasing amount of the torque to be transmitted, is transmitted by way of the first clutch (15) by means of the connectable gear stage (13), until an amount of torque, which enables the disengaging process to be carried out, is achieved within the engaged gear by reason of the torque which is correspondingly reducing here and that after the disengaging process for the purpose of decelerating the transmission input shaft (2) the first clutch (15) is still acted upon by a closing force until the gear members, which are to be connected to each other in a form-locking manner in the higher gear to be engaged, are synchronised and that the first clutch (15) is actuated in the opening direction after the form-locking connection is produced in the higher gear, provided that the newly engaged gear is not the highest gear (14).

6. A method as claimed in claim 5, characterised in that after disengaging the engaged gear, the engine torque is reduced by means of a torque influencing device (18.1) allocated to the drive motor (5) in dependence upon signals from the control device (17), until the gear members, which are to be connected to each other in a form-locking manner in the higher gear to be engaged, are almost synchronised.

7. A method as claimed in at least one of claims 1, 3 or 4, characterised in that, provided that the engaged gear is not the highest gear (14), when changing down gear, the first clutch (15) is acted upon by a controlled and increasing closing force in such a way, that when increasing the closing force, an increasing amount of the torque to be transmitted, is transmitted by way of the first clutch (15) by means of the connectable gear (13), until an amount of torque, which enables the disengaging process to be carried out, is achieved within the engaged gear by reason of the torque which is correspondingly reducing there and that the first clutch (15) is opened directly after the disengaging process and only then acted upon again with the closing force, when the transmission input shaft (2) is accelerated by means of an acceleration device at least almost until the gear members, which are to be connected to each other in a form-locking manner in the lower gear to be engaged, are synchronised and that the first clutch (15) is re-opened directly after the form-locking connection is produced.

8. A method as claimed in at least one of the claims 1, 3 and 4, characterised in that when changing down from the highest gear (14) the first clutch (15) which is acted upon by the closing force, is actuated in the opening direction and only then acted upon by the closing force again, when the incoming drive shaft (2) is accelerated by means of an acceleration device at least almost until the gear members, which are to be connected to each other in a form-locking manner in the lower gear to be engaged, are synchronised and that the first clutch (15) is re-opened directly after the form-locking connection of the gear members is produced.

9. A stepped change speed gearbox as claimed in claim 2 for carrying out the method as claimed in claims 7 or 8, characterised in that the acceleration device is the drive motor (5).

10. A stepped change speed gearbox as claimed in claim 2 for carrying out the method as claimed in at least one of claims 5 to 8, characterised in that the respective loose wheels of the pairs of toothed gear wheels allocated to the individual gears can be connected to the associated transmission shaft in a form-locking and/or friction-tight manner by means of automatic disengagable sliding sleeves (10,11).

11. A method as claimed in claim 5, characterised in that with a second clutch (3), which is arranged between the drive motor (5) and the stepped change speed gearbox (1) and which functions as a starting and disconnecting clutch, its torque transmission is limited to a maximum predeterminable value, if after removing the form-locking connection in the engaged higher gear for the purpose of decelerating the transmission input shaft (2), the first clutch (15) is acted upon by a closing force until the gear members, which are to be connected to each other in a form-locking manner in the lower gear to be engaged, are synchronised.

12. A method as claimed in claim 11, characterised in that the maximum predeterminable value for the torque transmission of the second clutch (3) is set by means of the control device (17) dependent upon the respective engaged gear and/or on the driving torque of the engine.

13. A stepped change speed gearbox as claimed in claim 2, characterised in that the connectable gear stage has a smooth or a graduated adjustability of the transmission ratio ($n_{in}/n_{out}$).

14. A stepped change speed gearbox as claimed in claim 13, characterised in that the connectable gear stage is a belt disc drive which has a non-rotatable belt disc and a rotatable belt disc and the rotatable belt disc can be connected by way of a first clutch, which can be operated in the slip condition, to the transmission shaft carrying the rotatable belt disc.

15. A stepped change speed gearbox as claimed in claim 13, characterised in that the connectable gear stage is a belt disc drive, which has a first belt disc (20,21) non-rotatably arranged on the transmission input shaft (2) and a second belt disc (23,24) non-rotatably arranged on an intermediate shaft (22) and the intermediate shaft (22) is connected to the transmission output shaft (12) by way of an intermediate gear stage (pinion 27).

16. A stepped change speed gearbox as claimed in claim 15, characterised in that the belt discs are adjustable in such a way that at least at times the torque cannot be transmitted and that the degree of belt engagement can be adjusted.

17. A stepped change speed gearbox as claimed in claim 13, characterised in that the transmission ratio is adjusted in dependence upon the transmission ratio of the respective engaged gear.

18. A stepped change speed gearbox as claimed in claim 2 or 13, characterised in that the first clutch is a friction clutch which is actuated by an auxiliary force.

19. A stepped change speed gearbox as claimed in claim 17, characterised in that the friction clutch is a plate clutch.

20. A stepped change speed gearbox as claimed in claim 17, characterised in that the friction clutch is a cone clutch.

21. A stepped change speed gearbox as claimed in claim 2 or 13, characterised in that the first clutch is a magnetic clutch.

22. A stepped change speed gearbox as claimed in claim 2 or 13, characterised in that the first clutch can transmit the torque hydrodynamically.

23. A stepped change speed gearbox as claimed in claim 2 or 13, characterised in that the first clutch can transmit the torque hydrostatically.

**Claims for the following Contracting States : DE, GB**

1. A method for gear changing a stepped change speed gearbox (1) for motor vehicles having
   - a transmission input shaft (2) which can be connected to a drive motor (5),
   - a transmission output shaft (12) which can be connected to the motor-driven vehicle wheels,
   - several pairs of toothed gear wheels (6 to 9) allocated to the individual gears and in each case one of the toothed gear wheels being held as a fixed wheel on the one transmission shaft and the other as a loose wheel on the other transmission shaft and for the purpose of engaging the corresponding gear, the loose wheel can be connected in a form-locking and/or friction-tight manner to the associated transmission shaft,
   - a connectable gear stage (13) which is arranged between the transmission input shaft (2) and the transmission output shaft (12) and is designed as the highest gear (14) in the stepped change speed gearbox (1) and the loose wheel of the highest gear (14) can be connected to the transmission shaft (2) carrying the loose wheel by way of a first clutch (15), which can he driven in the slip condition,

   characterised in that the connectable gear stage (13) is at least at times engaged for the purpose of initiating a gear change process, even if the respective engaged gear has not yet been disengaged and that the actuation of the first clutch (15) by a control device (17) both with regard to the rate of opening and closing rate and also with regard to the closing force is controlled in such a way that the connectable gear stage (13) transmits a transition torque, which, with regard to the gears participating in each case in a gear change, assumes an intermediate value according to the amount in comparison to the maximum torque which can be transmitted in these gears.

2. A method as claimed in claim 1, characterized in that the torque moment which can be transmitted by the first clutch (15) is limited to a maximum predeterminable value.

3. A method as claimed in one of claims 1 and/or 2, characterised in that when changing up gear, the first clutch (15) is acted upon by a controlled and increasing closing force in such a way, that when increasing the closing force, an increasing amount of the torque to be transmitted, is transmitted by way of the first coupling (15) by means of the connectable gear (13), until an amount of torque, which enables the disengaging process to be carried out, is achieved within the engaged gear by reason of the torque correspondingly reducing there, and the first clutch (15) remains acted upon by a closing force after the disengaging process for the purpose of decelerating the transmission input shaft (2) until the gear members, which are to be connected to each other in a form-locking manner in the higher gear to be engaged, are synchronised, and that the first clutch (15) is actuated in the opening direction after the form-locking connection is produced in the higher gear, provided that the newly engaged gear is not the highest gear (14).

4. A method as claimed in claim 3, characterised in that the engine torque is reduced by means of a torque influencing device (18.1), allocated to the drive motor, in dependence upon signals from the control device (17) after disengaging the engaged gear, until the gear members, which are to be connected to each other in a form-locking manner in the higher gear to be engaged, are at least almost synchronised.

5. A method as claimed in one of claims 1 and/or 2, characterised in that, provided that the engaged year is not the highest gear (14), when changing down gear, the first clutch (15) is acted upon by a controlled increasing closing force in such a way that when increasing the closing force, an increasing proportion of the torque to be transmitted by way of the first clutch (15) is transmitted by the connectable gear stage (13), until within the engaged gear, by reason of the torque correspondingly reducing there, an amount of torque, which enables the disengaged process to be carried out, is achieved and that the first clutch (15) is opened directly after the disengaging process and is only then acted upon by the closing force again, if the transmission input shaft (2) is accelerated by means of an accelerating device at least almost until the gear members to be connected to each other in a form-locking manner in the lower gear to be engaged are synchronised, and that the first clutch (15) is opened again directly after the form-locking connection is produced.

6. A method as claimed in at least one of claims 1 and/or 2, characterised in that when changing down gear from the highest gear (14), the first clutch (15) which is acted upon by a closing force, is actuated in the opening direction and is only then acted upon by a closing force again, when the transmission input shaft (2) is accelerated by means of an accelerating device at least almost until the gear members to be connected to each other in a form-locking manner in the lower gear to be engaged are synchronised, and that the first clutch (15) is opened again directly after the form-locking connection of the gear members is produced.

7. Stepped change speed gearbox for carrying out the method according to at least one of claims 1 to 6 having
   - a transmission input shaft (2) which can be connected to a drive motor (5),
   - a transmission output shaft (12) which can be connected to the motor-driven vehicle wheels,
   - several pairs of toothed gear wheels (6 to 9) allocated to the individual gears and in each case one of the toothed gear wheels being held as a fixed wheel on the one transmission shaft and the other as a loose wheel on the other transmission shaft and for the purpose of engaged the corresponding gear, the loose wheel can be connected in a form-locking and/or friction-tight manner to the associated transmission shaft,
   - a connectable gear stage (13), which is arranged between the transmission input shaft (2) and the transmission output shaft (12) and which is designed as the highest gear of the stepped change speed gearbox (1), and the loose wheel of the highest gear (14) can be connected by way of a first clutch (15), which can be operated in the slip condition, to the transmission shaft (2) carrying the loose wheel,
characterised in that the loose wheels of the individual gears (pairs of toothed gear wheels 6 to 9) can be connected to the associated transmission shaft in a form-locking and/or friction-tight manner by way of automatic disengaging sliding sleeves (10,11).

8. A stepped change speed gearbox as claimed in claim 7, characterised in that the accelerating device, which can be connected to the transmission input shaft (2), is the drive motor (5).

9. A method as claimed in claim 3, characterised in that in the case of a second clutch (3) which is arranged between the drive motor (5) and the stepped change speed gearbox (1) and functions as a starting and a disconnecting clutch, its torque transmission is limited to a maximum predeterminable value, if after raising the form-locking connection in the engaged higher gear, for the purpose of retarding the transmission input shaft (2) the first clutch (15) is acted upon by a closing force until the gear members, which are to be connected in a form-locking manner to each other in the lower gear to be engaged, are synchronised.

10. A method as claimed in claim 9, characterised in that the maximum predeterminable value for the torque transmission of the second clutch (3) is adjusted by means of the control unit (17) dependent on the respective engaged gear and/or on the driving torque of the drive motor (5).

11. A stopped change speed gearbox for carrying out the method as claimed in claim 1 having
   - a transmission input shaft (2) which can be connected to a drive motor (5),
   - a transmission output shaft (12) which can be connected to the motor-driven vehicle wheels,
   - several pairs of toothed gear wheels (6 to 9) allocated to the individual gears and in each case one of the toothed gear wheels being held as a fixed wheel on the one gear shaft and the other as a loose wheel on the other gear shaft and for the purpose of engaging the corresponding gear, the loose wheel can be connected in a form-locking and/or friction-tight manner to the associated gear shaft,
   - a connectable gear stage (13), which is arranged between the transmission input shaft (2) and the transmission output shaft (12),
characterised in that the connectable gear stage has a smooth or stepped adjustability of the conversion ratio ($n_{in}/n_{out}$).

12. A stepped change speed gearbox as claimed in claim 11, characterised in that the connectable gear stage is a belt disc drive which has a non-rotatable belt disc and a rotatable belt disc and the rotatable belt disc can be connected by way of a first clutch, which can be operated in the slip condition, to the transmission shaft carrying the rotatable belt disc.

**13.** A stopped change speed gearbox as claimed in claim 11, characterised in that the connectable gear stage is a belt disc drive, which has a first belt disc (20,21) non-rotatably arranged on the transmission input shaft (2) and a second belt disc (23, 24) non-rotatably arranged on an intermediate shaft (22) and the intermediate shaft (22) is connected by way of an intermediate gear stage (pinion 27) to the transmission output shaft (12).

**14.** A stepped change speed gearbox as claimed in claim 13, characterised in that the belt discs can be adjusted in such a way that at least at times the torque cannot be transmitted by the belt (26) and that the angle of the belt engagement can be changed.

**15.** A stepped change speed gearbox as claimed in claim 11, characterised in that the conversion ratio ($n_{in}/n_{out}$) is adjusted in dependence upon the conversion ratio of the respective engaged gear.

**16.** A stepped change speed gearbox as claimed in at least one of claims 7, 8 or 11, characterised in that the first clutch is a friction clutch actuated by an auxiliary force.

**17.** A stepped change speed gearbox as claimed in claim 15, characterised in that the friction clutch is a plate clutch.

**18.** A stepped change speed gearbox as claimed in claim 15, characterised in that the friction clutch is a cone clutch.

**19.** A stepped change speed gearbox as claimed in at least one of claims 7, 8 or 11, characterised in that the first clutch can transmit the torque hydrodynamically.

**20.** A stepped change speed gearbox as claimed in at least one of the claims 7, 8 or 11, characterised in that the first clutch can transmit the torque hydrostatically.

**Revendications**
**Revendications pour les Etats contractants suivants : ES, FR, IT**

**1.** Procédé pour faire passer des vitesses dans une boîte de vitesses (1) de véhicule automobile, qui comprend
- un arbre d'entrée (2) de la boîte qui peut être relié à un moteur d'entraînement (5),
- un arbre de sortie (12) de la boîte qui peut être relié aux roues menées du véhicule,
- plusieurs paires de pignons (6 à 9) affectées aux vitesses individuelles de la boîte et dont l'un de chacune d'elles est monté sous forme de pignon fixe sur l'un des arbres de la boîte et l'autre, sous forme de pignon fou sur l'autre arbre de la boîte, le pignon fou pouvant être relié par complémentarité de formes et/ou par frottement à l'arbre correspondant de la boîte pour l'enclenchement de la vitesse correspondante,
- une vitesse (13) de la boîte qu'il s'agit d'enclencher, qui est disposée entre l'arbre d'entrée (2) et l'arbre de sortie (12) de la boîte et qui a à l'intérieur de la boîte de vitesses un rapport de transmission ($n_{entrée}/n_{sortie}$) qui est plus petit que celui de la vitesse momentanément enclenchée,

caractérisé en ce que la vitesse (13) de la boîte qu'il s'agit d'enclencher pour engager un passage de vitesses est aussi enclenchée au moins temporairement lorsque la vitesse particulière enclenchée n'est pas encore désenclenchée.

**2.** Boîte de vitesses pour la mise en oeuvre du procédé selon la revendication 1, comprenant
- un arbre d'entrée (2) de la boîte pouvant être relié à un moteur d'entraînement (5),
- un arbre de sortie (12) de la boîte pouvant être relié aux roues menées du véhicule,
- plusieurs paires de pignons (6 à 9) affectées aux vitesses individuelles de la boîte et dont l'un de chacune d'elles est monté sous forme de pignon fixe sur l'un des arbres de la boîte et l'autre, sous forme de pignon fou sur l'autre arbre de la boîte, le pignon fou pouvant être relié par complémentarité de formes et/ou par friction avec l'arbre correspondant de la boîte pour l'enclenchement de la vitesse correspondante,
- une vitesse (13) de la boîte qu'il s'agit d'enclencher, qui est disposée entre l'arbre d'entrée (2) et l'arbre de sortie (12) de la boîte et qui est la vitesse la plus élevée (14) de la boîte de vitesses (1) à l'intérieur de cette boîte,
- un premier embrayage (15) pouvant être amené à fonctionner avec glissement et qui permet de relier le pignon fou de la vitesse la plus élevée (14) de la boîte à l'arbre (2) de cette boîte qui supporte le pignon fou, caractérisée en ce que la vitesse (13) de la boîte qu'il s'agit d'enclencher est aussi enclenchée au moins temporairement pour l'engagement d'un passage de vitesse lorsque la vitesse particulière enclenchée n'est pas encore désenclenchée.

3. Procédé selon la revendication 1 mis en oeuvre avec une boîte de vitesses selon la revendication 2, caractérisé en ce que le couple de rotation transmissible par le premier embrayage (15) est limité à un maximum pouvant être prescrit.

4. Procédé selon la revendication 1 mis en oeuvre avec une boîte de vitesses selon la revendication 2, caractérisé en ce que l'actionnement du premier embrayage (15) aussi bien en ce qui concerne sa vitesse d'ouverture et de fermeture que sa force de fermeture est commandé par un dispositif de commande (17) de manière qu'un couple de réaction de la vitesse la plus élevée de la boîte soit transmis dans la vitesse (13) qu'il s'agit d'enclencher en plus du couple du moteur d'entraînement (5).

5. Procédé selon au moins l'une des revendications 1, 3 ou 4, caractérisé en ce que, lors du passage à une vitesse supérieure, le premier embrayage est soumis à une force de fermeture dont la croissance est commandée de manière qu'avec l'augmentation de la force de fermeture, une proportion croissante du couple de rotation devant être transmis soit transmise par l'intermédiaire du premier embrayage (15) par la vitesse (13) de la boîte qu'il s'agit d'enclencher jusqu'à ce qu'une valeur du couple de rotation autorisant un processus de désenclenchement soit atteinte à l'intérieur de la vitesse enclenchée de la boîte par suite de la diminution correspondante du couple de rotation dans cette vitesse, et en ce que le premier embrayage (15) demeure soumis à la force de fermeture après le processus de désenclenchement, afin de ralentir l'arbre d'entrée (2) de la boîte, jusqu'à la marche en synchronisme des éléments de la boîte devant être reliés les uns aux autres par complémentarité de formes dans la vitesse supérieure devant être passée, et en ce que le premier embrayage (15) est actionné dans le sens de l'ouverture après établissement de la complémentarité de formes dans la vitesse supérieure, à condition que la vitesse nouvellement enclenchée ne soit pas la vitesse la plus élevée (14) de la boîte.

6. Procédé selon la revendication 5, caractérisé en ce qu'un dispositif (18.1) agissant sur le couple de rotation et associé au moteur d'entraînement (5) réduit le couple de rotation du moteur en fonction de signaux du dispositif de commande (17) après désenclenchement de la vitesse enclenchée de la boîte jusqu'à ce que la marche en synchronisme des éléments de la boîte devant être reliés par complémentarité de formes soit au moins approximativement atteinte dans la vitesse supérieure devant être enclenchée.

7. Procédé selon au moins l'une des revendications 1, 3 ou 4, caractérisé en ce que, à condition que la vitesse de la boîte qui est enclenchée ne soit pas la vitesse la plus élevée (14), le premier embrayage (15) est soumis, lors d'un passage à une vitesse inférieure, à une force de fermeture dont la croissance est commandée de manière qu'avec l'accroissement de la force de fermeture, une proportion croissante du couple de rotation devant être transmis soit transmise par l'intermédiaire du premier embrayage (15) au moyen de la vitesse (13) de la boite qu'il s'agit d'enclencher jusqu'à ce qu'une valeur du couple de rotation qui autorise le désenclenchement soit atteinte à l'intérieur de la vitesse enclenchée de la boîte par suite de la diminution correspondante du couple de rotation à l'intérieur de cette dernière vitesse, et en ce que le premier embrayage (15) est ouvert immédiatement après le processus de désenclenchement et n'est ensuite soumis à la force de fermeture qu'au moment auquel l'arbre d'entrée (2) de la boite a été accéléré par un organe d'accélération au moins approximativement jusqu'à la marche en synchronisme des éléments de la boîte devant être reliés les uns aux autres par complémentarité de formes dans la vitesse inférieure devant être enclenchée, et en ce que le premier embrayage (15) est réouvert immédiatement après établissement de la liaison par complémentarité de formes.

8. Procédé selon au moins l'une des revendications 1, 3 ou 4, caractérisé en ce que, lors du passage à une vitesse inférieure à partir de la vitesse la plus élevée (14) de la boîte, le premier embrayage (15) soumis à une force de fermeture est actionné dans le sens de l'ouverture et n'est ensuite soumis à nouveau à une force de fermeture qu'au moment auquel l'arbre d'entrée (2) de la boîte a été accéléré par un organe d'accélération au moins approximativement jusqu'à la marche en synchronisme des éléments de la boîte devant être reliés les uns aux autres par complémentarité de formes dans la vitesse inférieure de la boîte devant être enclenchée, et en ce que le premier embrayage (15) est réouvert immédiatement après établissement de la liaison par complémentarité de formes des éléments de la boîte.

9. Boîte de vitesses selon la revendication 2 pour la mise en oeuvre du procédé selon les revendications 7 ou 8, caractérisée en ce que l'organe d'accélération est le moteur d'entraînement (5).

10. Boîte de vitesses selon la revendication 2 pour la mise en oeuvre du procédé selon au moins l'une des revendications 5 à 8, caractérisée en ce que le pignon fou de chaque paire de pignons affectée aux vitesses individuelles de la boite peut être relié par complémentarité de formes et/ou par friction à l'arbre correspondant de la boîte au moyen de manchons d'accouplement (10, 11) désenclenchables automatiquement.

11. Procédé selon la revendication 5, caractérisé en ce que, lorsqu'un second embrayage (3) agissant en embrayage de démarrage et d'isolement est disposé entre le moteur d'entraînement (5) et la boîte de vitesses (1), la transmission de son couple de rotation est limitée à un maximum pouvant être prescrit lorsque, après suppression de la complémentarité de formes dans la vitesse supérieure enclenchée, le premier embrayage (15) est soumis à une force de fermeture pour ralentir l'arbre d'entrée (2) de la boîte jusqu'à la marche en synchronisme des éléments de la vitesse inférieure devant être passée dans la boîte qui doivent être reliés les uns aux autres par complémentarité de formes.

12. Procédé selon la revendication 11, caractérisé en ce que le maximum pouvant être prescrit pour la transmission du couple de rotation du second embrayage (3) est réglé par l'unité de commande (17) en fonction de la vitesse particulière enclenchée et/ou du couple d'entraînement du moteur.

13. Boite de vitesses selon la revendication 2, caractérisée en ce que la vitesse de la boîte qu'il s'agit d'enclencher présente une possibilité de réglage continu ou pas à pas du rapport de transmission ($n_{entrée}/n_{sortie}$).

14. Boite de vitesses selon la revendication 13, caractérisée en ce que la vitesse de la boîte qu'il s'agit d'enclencher est un entraînement à poulies à courroie qui comprend une poulie solidarisée en rotation et une poulie rotative et dans lequel la poulie rotative peut être reliée à l'arbre de la boîte qui supporte la poulie rotative par un premier embrayage pouvant être amené à fonctionner avec glissement.

15. Boite de vitesses selon la revendication 13, caractérisée en ce que la vitesse de la boite qu'il s'agit d'enclencher est un entraînement à poulies a courroie qui comprend une première poulie (20, 21) solidarisée en rotation avec l'arbre d'entrée (2) de la boite et une seconde poulie (23, 24) solidarisée en rotation avec un arbre intermédiaire (22), l'arbre intermédiaire (22) étant relié a l'arbre de sortie (12) de la boîte au moyen d'un étage intermédiaire de transmission (pignon 27).

16. Boite de vitesses selon la revendication 15, caractérisée en ce que les poulies à courroie sont réglables de manière qu'aucun couple de rotation ne soit transmis au moins temporairement par la courroie (26) et de manière que le degré de prise de la courroie soit variable.

17. Boîte de vitesses selon la revendication 13, caractérisée en ce que le réglage du rapport de transmission s'effectue en fonction du rapport de transmission de la vitesse particulière enclenchée de la boite.

18. Boîte de vitesses selon la revendication 2 ou 13, caractérisée en ce que le premier embrayage est un embrayage à friction actionné par une force auxiliaire.

19. Boîte de vitesses selon la revendication 17, caractérisé en ce que l'embrayage à friction est un embrayage à disques.

20. Boite de vitesses selon la revendication 17, caractérisé en ce que l'embrayage a friction est un embrayage à cones.

21. Boîte de vitesses selon la revendication 2 ou 13, caractérisée en ce que le premier embrayage est un embrayage magnétique.

22. Boîte de vitesses selon la revendication 2 ou 13, caractérisée en ce que le premier embrayage est à transmission hydrodynamique du couple de rotation.

23. Boîte de vitesses selon la revendication 2 ou 13, caractérisée en ce que le premier embrayage est à transmission hydrostatique du couple de rotation.

**Revendications pour les Etats contractants**

**suivants : DE, GB**

1. Procédé pour faire passer des vitesses dans une boîte de vitesses (1) de véhicule automobile, qui comprend
   - un arbre d'entrée (2) de la boîte qui peut être relié à un moteur d'entraînement (5),
   - un arbre de sortie (12) de la boîte qui peut être relié aux roues menées du véhicule,
   - plusieurs paires de pignons (6 à 9) affectées aux vitesses individuelles de la boîte et dont l'un de chacune d'elles est monté sous forme de pignon fixe sur l'un des arbres de la boîte, et l'autre sous forme de pignon fou sur l'autre arbre de la boîte, le pignon fou pouvant être relié par complémentarité de formes et/ou par frottement à l'arbre correspondant de la boîte pour l'enclenchement de la vitesse correspondante,
   - une vitesse (13) de la boîte qu'il s'agit d'enclencher, qui est disposée entre l'arbre d'entrée (2) et l'arbre de sortie (12) de la boîte et qui consiste en la vitesse la plus élevée (14) de la boîte de vitesses (1), le pignon fou de la vitesse la plus élevée (14) de la boîte pouvant être relié à l'arbre (2) de la boîte qui supporte le pignon fou au moyen d'un premier embrayage (15) pouvant être amené à fonctionner avec glissement,

   caractérisé en ce que la vitesse (13) de la boîte qu'il s'agit d'enclencher pour engager un passage de vitesse est aussi enclenchée au moins temporairement lorsque la vitesse particulière enclenchée n'est pas encore désenclenchée et en ce que l'actionnement du premier embrayage (15) est commandé par un dispositif de commande (17), aussi bien en ce qui concerne la vitesse d'ouverture et de fermeture qu'en ce qui concerne la force de fermeture, de manière que la vitesse qu'il s'agit d'enclencher (13) transmette un couple de transfert dont la valeur, par rapport à celle des vitesses de la boîte qui participent à chaque passage de vitesse, prend une grandeur intermédiaire en comparaison avec les couples de rotation maximaux transmissibles par ces vitesses de la boîte.

2. Procédé selon la revendication 1, caractérisé en ce que le couple de rotation transmissible par le premier embrayage (15) est limité à un maximum pouvant être prescrit.

3. Procédé selon l'une des revendications 1 et/ou 2, caractérisé en ce que lors du passage à une vitesse supérieure, le premier embrayage (15) est soumis à une force de fermeture, dont la croissance est commandée spécifiquement de manière qu'avec l'augmentation de la force de fermeture, une proportion croissante du couple de rotation devant être transmis soit transmise par l'intermédiaire du premier embrayage (15) par la vitesse (13) de la boîte qu'il s'agit d'enclencher jusqu'à ce qu'une valeur du couple de rotation autorisant un processus de désenclenchement soit atteinte à l'intérieur de la vitesse enclenchée de la boîte par suite de la diminution correspondante du couple de rotation dans cette vitesse, et en ce que le premier embrayage (15) demeure soumis à la force de fermeture après le processus de désenclenchement, afin de ralentir l'arbre d'entrée (2) de la boîte, jusqu'à la marche en synchronisme des éléments de la boîte devant être reliés les uns aux autres par complémentarité de formes dans la vitesse supérieure devant être passée, et en ce que le premier embrayage (15) est actionné dans le sens de l'ouverture après établissement de la complémentarité de formes dans la vitesse supérieure, à condition que la vitesse nouvellement enclenchée ne soit pas la vitesse la plus élevée (14) de la boîte.

4. Procédé selon la revendication 3, caractérisé en ce qu'un dispositif (18.1) agissant sur le couple de rotation et associé au moteur d'entraînement (5) réduit le couple de rotation du moteur en fonction de signaux du dispositif de commande (17) après désenclenchement de la vitesse enclenchée de la boîte jusqu'à ce que la marche en synchronisme des éléments de la boîte devant être reliés par complémentarité de formes soit au moins approximativement atteinte dans la vitesse supérieure devant être enclenchée.

5. Procédé selon l'une des revendications 1 et/ou 2, caractérisé en ce que, à condition que la vitesse de la boîte qui est enclenchée ne soit pas la vitesse la plus élevée (14), le premier embrayage (15) est soumis, lors d'un passage à une vitesse inférieure, à une force de fermeture dont la croissance est commandée de manière qu'avec l'accroissement de la force de fermeture, une proportion croissante du couple de rotation devant être transmis soit transmise par l'intermédiaire du premier embrayage (15) au moyen de la vitesse (13) de la boîte qu'il s'agit d'enclencher jusqu'à ce qu'une valeur du couple de rotation qui autorise le désenclenchement soit atteinte à l'intérieur de la vitesse enclenchée de la boîte par suite de la diminution correspondante du couple de rotation à l'intérieur de cette dernière vitesse, et en ce que le premier embrayage (15) est ouvert immédiatement après le processus de désenclenchement et n'est ensuite soumis à nouveau à la force de fermeture qu'au moment auquel l'arbre d'entrée (2) de la boîte a été accéléré par un organe d'accélération au moins approximativement jusqu'à la marche en synchronisme des éléments de la boîte devant être reliés les uns aux autres par complémentarité de formes dans la vitesse inférieure devant être enclenchée, et en ce que le premier embrayage (15) est réouvert immédiatement après établissement de la liaison par complémentarité de formes.

6. Procédé selon au moins l'une des revendications 1 et/ou 2, caractérisé en ce que, lors du passage à une vitesse inférieure à partir de la vitesse la plus élevée (14) de la boîte, le premier embrayage (15) soumis à une force de fermeture est actionné dans le sens de l'ouverture et n'est ensuite soumis à nouveau à une force de fermeture qu'au moment auquel l'arbre d'entrée (2) de la boîte a été accéléré par un organe d'accélération au moins approximativement jusqu'à la marche en synchronisme des éléments de la boîte devant être reliés les uns aux autres par complémentarité de formes dans la vitesse inférieure de la boîte devant être enclenchée, et en ce que le premier embrayage (15) est réouvert immédiatement après établissement de la liaison par complémentarité de formes des éléments de la boîte.

7. Boîte de vitesses pour la mise en oeuvre du procédé selon au moins l'une des revendications 1 à 6, comprenant
   - un arbre d'entrée (2) de la boîte pouvant être relié à un moteur d'entraînement (5),
   - un arbre de sortie (12) de la boîte pouvant être relié aux roues menées du véhicule,
   - plusieurs paires de pignons (6 à 9) affectées aux vitesses individuelles de la boîte et dont l'un de chacun d'elles est monté sous forme de pignon fixe sur l'un des arbres de la boîte et l'autre, sous forme de pignon fou sur l'autre arbre de la boîte, le pignon fou pouvant être relié par complémentarité de formes et/ou par friction avec l'arbre concerné de la boîte pour l'enclenchement de la vitesse correspondante,
   - une vitesse (13) de la boîte qu'il s'agit d'enclencher, qui est diposée entre l'arbre d'entrée (2) et l'arbre de sortie (12) de la boîte et qui est la vitesse la plus élevée de la boîte de vitesses (1), le pignon fou de la vitesse la plus élevée (14) de la boîte pouvant être relié à l'arbre (2) de la boîte qui supporte ce pignon fou au moyen d'un premier embrayage (15) pouvant être amené à fonctionner avec glissement,

   caractérisée en ce que les pignons fous des vitesses individuelles de la boîte (paires de pignons 6 à 9 des vitesses) peuvent être reliés par complémentarité de formes et/ou par frottement à l'arbre concerné de la boîte au moyen de manchons d'accouplement (10 ; 11) désenclenchables automatiquement.

8. Boîte de vitesses selon la revendication 7, caractérisée en ce que l'organe d'accélération qui peut être relié à l'arbre d'entrée (2) de la boîte de vitesses est le moteur d'entraînement (5).

9. Procédé selon la revendication 3, caractérisé en ce que, lorsqu'un second embrayage (3) agissant en embrayage de démarrage et d'isolement est disposé entre le moteur d'entraînement (5) et la boîte de vitesses (1), la transmission de son couple de rotation est limitée à un maximum pouvant être prescrit lorsque, après suppression de la complémentarité de formes dans la vitesse supérieure enclenchée, le premier embrayage (15) est soumis à une force de fermeture pour ralentir l'arbre d'entrée (2) de la boîte jusqu'à la marche en synchronisme des éléments de la vitesse inférieure devant être passée dans la boîte qui doivent être reliés les uns aux autres par complémentarité de formes.

10. Procédé selon la revendication 9, caractérisé en ce que le maximum pouvant être prescrit pour la transmission du couple de rotation du second embrayage (3) est réglé par l'unité de commande (17) en fonction de la vitesse particulière enclenchée et/ou du couple d'entraînement du moteur (5).

11. Boîte de vitesses pour la mise en oeuvre du procédé selon la revendication 1, comprenant
    - un arbre d'entrée (2) de la boîte pouvant être relié à un moteur d'entraînement (5),
    - un arbre de sortie (12) de la boîte pouvant être relié aux roues menées du véhicule,
    - plusieurs paires de pignons (6 à 9) affectées aux vitesses individuelles de la boîte et dont l'un de chacune d'elles est monté sous forme de pignon fixe sur l'un des arbres de la boîte et l'autre, sous forme de pignon fou sur l'autre arbre de la boîte, le pignon fou pouvant être relié par complémentarité de formes et/ou par friction à l'arbre correspondant de la boîte pour l'enclenchement de la vitesse correspondante,
- une vitesse (13) de la boîte qu'il s'agit d'enclencher et qui est disposée entre l'arbre d'entrée (2) et l'arbre de sortie (12) de la boîte,

caractérisée en ce que la vitesse de la boîte qu'il s'agit d'enclencher présente une possibilité de réglage continu ou pas à pas du rapport de transmission ($n_{entrée}/n_{sortie}$).

12. Boîte de vitesses selon la revendication 11, caractérisée en ce que la vitesse de la boîte qu'il s'agit d'enclencher est un entraînement à poulies à courroie qui comprend une poulie solidarisée en rotation et une poulie rotative et dans lequel la poulie rotative peut être reliée à l'arbre de la boîte qui supporte la poulie rotative par un premier embrayage pouvant être amené à fonctionner avec glissement.

13. Boîte de vitesses selon la revendication 11, caractérisée en ce que la vitesse de la boîte qu'il s'agit d'enclencher est un entraînement à poulies à courroie qui comprend une première poulie (20, 21) solidarisée en rotation avec l'arbre d'entrée (2) de la boîte et une seconde poulie (23, 24) solidarisée en rotation avec un arbre intermédiaire (22), l'arbre intermédiaire (22) étant relié à l'arbre de sortie (12) de la boîte au moyen d'un étage intermédiaire de transmission (pignon 27).

14. Boîte de vitesses selon la revendication 13, caractérisée en ce que les poulies à courroie sont réglables de manière qu'aucun couple de rotation ne soit transmis au moins temporairement par la courroie (26) et de manière que le degré de prise de la courroie soit variable.

15. Boîte de vitesses selon la revendication 11, caractérisée en ce que le réglage du rapport de transmission ($n_{entrée}/n_{sortie}$) s'effectue en fonction du rapport de transmission de la vitesse particulière enclenchée de la boîte.

16. Boîte de vitesses selon au moins l'une des revendications 7, 8 ou 11, caractérisée en ce que le premier embrayage est un embrayage à friction actionné par une force auxiliaire.

17. Boîte de vitesses selon la revendication 15, caractérisée en ce que l'embrayage à friction est un embrayage à disques.

18. Boîte de vitesses selon la revendication 15, caractérisée en ce que l'embrayage à friction est un embrayage à cônes.

19. Boîte de vitesses selon au moins l'une des revendications 7, 8 ou 11, caractérisée en ce que le premier embrayage est à transmission hydrodynamique du couple de rotation.

20. Boîte de vitesses selon au moins l'une des revendications 7, 8 ou 11, caractérisée en ce que le premier embrayage est à transmission hydrostatique du couple de rotation.

Fig.1

Fig.2

wirksames Drehmoment an
der Getriebeausgangswelle 12 [Nm]

$M \cdot i_1$

$M \cdot i_2$

$M \cdot i_3$

$M \cdot i_4$

$M \cdot i_2$

$M \cdot i_3$

$M \cdot i_4$

$M \cdot i_5$

Zeit(s)

Fig. 3

M [Nm]

wirksames Drehmoment an
der Getriebeeingangswelle 2

$M \cdot i_1$

$F_2$

$M_{\ddot{u}2}$  $M_{\ddot{u}1}$

$M \cdot i_2$

$F_1$

$t_0$  $t_1'$  $t_2'$  $t_3'$  $t_4'$  $t_5'$  $t_6'$

$t_1$  $t_2$  $t_3$  $t_4$  $t_5$  $t_6$

Zeit(s)

Fig.4

M [Nm]

wirksames Drehmoment an
der Getriebeeingangswelle 2

$F_4$

$M_{\ddot{u}}$

$M_{\ddot{u}G}$

$F_3$

$F_5$

$M \cdot i_2$

$t_0$  $t_1$  $t_2$  $t_3$  $t_4$  $t_4'$  $t_5$  $t_5'$  $t_6$  $t_6'$

$t_3'$

Zeit(s)

24

Fig.5